(19) Europäisches Patentamt
European Patent Office
Office européen des brevets

(11) **EP 4 718 927 A1**

(12) **EUROPEAN PATENT APPLICATION**
published in accordance with Art. 153(4) EPC

(43) Date of publication:
**01.04.2026   Bulletin 2026/14**

(21) Application number: **24835224.7**

(22) Date of filing: **18.06.2024**

(51) International Patent Classification (IPC):
**H04W 72/0453** (2023.01)

(52) Cooperative Patent Classification (CPC):
**H04L 5/00; H04W 72/0446; H04W 72/0453;
H04W 72/0457; H04W 72/20**

(86) International application number:
**PCT/CN2024/099949**

(87) International publication number:
**WO 2025/007741 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **04.07.2023   CN 202310813502**

(71) Applicant: **Huawei Technologies Co., Ltd.
Shenzhen, Guangdong 518129 (CN)**

(72) Inventors:
• **SUN, Huan
Shenzhen, Guangdong 518129 (CN)**
• **LUO, Zhihu
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57)   This application provides a communication method and a communication apparatus. The method includes: receiving first indication information, where the first indication information indicates a first parameter configuration, the first parameter configuration is one of K parameter configurations, and K is a positive integer; and any parameter configuration in the K parameter configurations includes one or more of the following parameters: a quantity of resource blocks RBs, a frequency domain resource offset, a quantity of time domain symbols, and a mapping manner; and determining a time-frequency resource position of a first control resource set CORESET based on the first parameter configuration. According to the method described in this application, signaling resources can be saved.

FIG. 10

**Description**

TECHNICAL FIELD

This application relates to the field of communication technologies, and in particular, to a communication method and apparatus.

BACKGROUND

At present, the industry has proposed communication of a new radio (new radio, NR) access technology implemented in a private network spectrum. The private network spectrum is, for example, a 3.6 MHz spectrum in a frequency division duplex (frequency division duplex, FDD) frequency band of the European railway private network, or a 3 MHz spectrum of the European public safety network. In such a narrowband, a quantity of resource blocks (resource block, RB) that can be supported by the private network spectrum in frequency domain is limited, and consequently a network may fail to send a complete public control resource block, for example, a control resource set 0 (control resource set #0, CORESET #0). Therefore, a new parameter configuration set needs to be designed to indicate or determine a time-frequency resource position of the CORESET #0. However, indicating all possible combinations of parameter values may cause excessively high signaling overheads.

SUMMARY

Embodiments of this application provide a communication method and apparatus, to save signaling resources.
According to a first aspect, this application provides a communication method. Optionally, the method may be executed by a terminal device, or by a component (for example, a processor, a chip, or a chip system) used in the terminal device, or by a logical module or software that can implement all or some functions of the terminal device. The method includes:
receiving first indication information, where the first indication information indicates a first parameter configuration, the first parameter configuration is one of K parameter configurations, and K is a positive integer, where any parameter configuration in the K parameter configurations includes one or more of the following parameters: a quantity of resource blocks RBs, a frequency domain resource offset, a quantity of time domain symbols, a mapping manner, a multiplexing mode, or a puncturing manner; and determining a time-frequency resource position of a first control resource set CORESET based on the first parameter configuration.
According to the method, the first indication information may indicate one of the K parameter configurations, so that the terminal device may determine the first parameter configuration from the K parameter configurations based on the first indication information, to determine the time-frequency resource position of the first CORESET, so that signaling overheads are reduced, or more reserved items are reserved, to indicate other information, so as to reduce signaling overheads.
In an example manner, the any parameter configuration in the K parameter configurations includes the following parameters, or consists of the following parameters: a quantity of resource blocks RBs, a frequency domain resource offset, a quantity of time domain symbols, a mapping manner, and a multiplexing mode.
In another example manner, the any parameter configuration in the K parameter configurations includes the following parameters, or consists of the following parameters: a quantity of resource blocks RBs, a frequency domain resource offset, a quantity of time domain symbols, a mapping manner, a multiplexing mode, and a puncturing manner.
In an optional manner, K is 13, 14, 15, or 16.
In an optional manner, the K parameter configurations are used for CORESETs.
In an optional manner, the frequency domain resource offset is a frequency domain resource offset of a CORESET relative to an SSB.
In an optional manner, the quantity of time domain symbols is a quantity of symbols occupied by a CORESET in time domain.
In an optional manner, the mapping manner is interleaved or non-interleaved. The mapping manner is a manner of CCE-to-REG mapping in a CORESET.
In an optional manner, the multiplexing mode is a multiplexing mode between an SSB and a CORESET.
In an optional manner, the puncturing manner is a puncturing manner for a CORESET or a CORESET #0.
In an optional manner, bandwidths of the CORESETs corresponding to the K parameter configurations each are less than 24 RBs. Specifically, the bandwidths of the CORESETs corresponding to the K parameter configurations include one or more of 12 RBs, 15 RBs, and 20 RBs. For example, the bandwidths of the CORESETs corresponding to the K parameter configurations include 12 RBs and 15 RBs, or 15 RBs and 20 RBs, or 15 RBs.
In an optional manner, the bandwidths of the CORESETs corresponding to the K parameter configurations include 20 RBs and 24 RBs.

In an optional manner, a bandwidth of a CORESET corresponding to a parameter configuration with a quantity of RBs being 24 in the K parameter configurations is 15 RBs and/or 20 RBs, or the bandwidth of the CORESET corresponding to the parameter configuration with a quantity of RBs being 24 in the K parameter configurations is 24 RBs and/or 20 RBs.

In an optional manner, frequency domain resource offsets corresponding to the K parameter configurations each are a value in a first value set, where a quantity of values in the first value set is greater than 3.

In this manner, the K parameter configurations can support more frequency domain resource offsets, that is, support more frequency domain deployment positions of CORESETs, to support flexible channel or network deployment.

In an optional manner, a frequency domain resource offset corresponding to a parameter configuration with a quantity of RBs being x1 in the K parameter configurations is a first value, or is a value in a second value set. For combinations of different values of x1, different values of the first value, or different values of the second value set, x1, the first value, and the second value set may be used as separate optional features, and may be combined with each other.

In an optional manner, when a quantity of RBs occupied by a CORESET corresponding to the parameter configuration with a quantity of RBs being x1 in the K parameter configurations is the same as a quantity of RBs occupied by an SSB in frequency domain, the first value may be 0, or a value of the first value may cause the SSB and the CORESET to occupy same RBs in frequency domain.

In this manner, a quantity of RBs occupied by the CORESET and the SSB as a whole can support various possible deployment positions of a channel in frequency domain, to support flexible channel deployment. In addition, the CORESET and the SSB occupy the same RB, and the terminal device does not need to adjust a center frequency of a filter at a receive end when receiving PDCCHs on the SSB and the CORESET, to reduce implementation complexity of the terminal device.

In an optional manner, a frequency domain resource offset corresponding to a parameter configuration with a quantity of RBs being 12 in the K parameter configurations is 0.

In this manner, when the SSB is 12 RBs, a quantity of RBs occupied by a CORESET of 12 RBs and the SSB as a whole is 12, which can support various possible deployment positions of a channel with 12 available RBs or a channel with 15 available RBs in frequency domain, to support flexible channel deployment. In addition, the CORESET of 12 RBs and the SSB occupy same RBs, and the terminal device does not need to adjust a receiving frequency when receiving PDCCHs on the SSB and the CORESET, to reduce implementation complexity of the terminal device.

In an optional manner, a frequency domain resource offset corresponding to a parameter configuration with a quantity of RBs being 20 in the K parameter configurations is 0.

For beneficial effects in this manner, refer to the foregoing optional manner.

In an optional manner, a quantity of time domain symbols that corresponds to a parameter configuration with a quantity of RBs being x2 in the K parameter configurations is a second value, or is a value in a third value set. For combinations of different values of x2, different values of the second value, or different values of the third value set, x2, the second value, and the third value set may be used as separate optional features, and may be combined with each other.

In an optional manner, the second value may be a largest value in possible values of the quantity of time domain symbol.

In this manner, a CORESET may include more physical resources or include more CCEs, so that downlink control information DCI can be sent to more users in the CORESET, to support a higher system capacity.

In an optional manner, a quantity of time domain symbols that corresponds to the parameter configuration with a quantity of RBs being 12 and/or the parameter configuration with a quantity of RBs being 24 in the K parameter configurations is 3.

In this manner, a CORESET may include more physical resources or include more CCEs, so that downlink control information DCI can be sent to more users in the CORESET, to support a higher system capacity. In an optional manner, a quantity of time domain symbols that corresponds to a parameter configuration with a quantity of RBs being x3 and a mapping manner being interleaved in the K parameter configurations is a third value, or is a value in a fourth value set. For combinations of different values of x3, different values of the third value, or different values of the fourth value set, x3, the third value, and the fourth value set may be used as separate optional features, and may be combined with each other.

In an optional manner, when a CORESET corresponding to a parameter configuration with a quantity of RBs being x3 in the K parameter configurations is a CORESET obtained after puncturing, and a mapping manner is interleaved, the third value may be a largest value in possible values of the time domain symbol.

In this manner, in the interleaved mapping manner, the CORESET obtained after puncturing may include more CCEs with consecutive numbers, so that a higher AL can be supported, and receiving performance of a PDCCH is improved.

In an optional manner, a quantity of time domain symbols that corresponds to a parameter configuration with a quantity of RBs being 24 and a mapping manner being interleaved in the K parameter configurations is 3.

In this manner, in the interleaved mapping manner, the CORESET obtained after puncturing may include more CCEs with consecutive numbers, so that a higher AL can be supported, and receiving performance of a PDCCH is improved.

In an optional manner, one parameter configuration in the K parameter configurations corresponds to bandwidths of a plurality of CORESET, or one parameter configuration in the K parameter configurations corresponds to values of a plurality of quantities of RBs. For example, one parameter configuration in the K parameter configurations corresponds to bandwidths of a CORESET of 12 RBs and a CORESET of 15 RBs, or one parameter configuration in the K parameter configurations corresponds to bandwidths of a CORESET of 20 RBs and a CORESET of 15 RBs, or one parameter configuration in the K parameter configurations corresponds to bandwidths of a CORESET of 20 RBs and a CORESET of 24 RBs.

In this manner, the plurality of bandwidths of the CORESET or the values of the plurality of quantities of RBs may share one parameter configuration, and a same indication status is used, to reduce signaling overheads.

In an optional manner, a bandwidth of a CORESET is associated with a synchronization raster, or a quantity of RBs of the CORESET is associated with the synchronization raster, or the bandwidth of the CORESET is associated with a frequency band number, or the quantity of RBs of the CORESET is associated with the frequency band number.

In an optional manner, a bandwidth of the first CORESET is associated with a synchronization raster or a frequency band number; or a quantity of RBs of the first CORESET is associated with the synchronization raster or the frequency band number.

In the foregoing two manners, when the first parameter configuration corresponds to a plurality of bandwidths of a CORESET, the terminal device may determine a bandwidth of a CORESET based on an association relationship between the bandwidth of the CORESET and the synchronization raster or an association relationship between the bandwidth of the CORESET and the frequency band number.

In an optional manner, the method further includes: determining the bandwidth of the first CORESET based on the synchronization raster or the frequency band number; or determining the quantity of RBs of the first CORESET based on the synchronization raster or the frequency band number.

In this manner, when the first parameter configuration corresponds to a plurality of bandwidths of a CORESET, the terminal device may determine a bandwidth of a CORESET based on the synchronization raster and the frequency band number.

In an optional manner, a mapping manner corresponding to a parameter configuration with a quantity of RBs being x4 in the K parameter configurations is a first mapping manner. For combinations of different values of x4 and different first mapping manners, x4 and the first mapping manner may be used as separate optional features, and may be combined with each other.

In an optional manner, the first CORESET is a CORESET determined based on a CORESET of 24 RBs, or the first CORESET is a continuous part in the CORESET of 24 RBs.

In an optional manner, the first CORESET is 15 RBs with lowest frequencies in the CORESET of 24 RBs, or the first CORESET is 20 RBs with lowest frequencies in the CORESET of 24 RBs.

In an optional manner, the first CORESET is a CORESET obtained by puncturing (or removing) nine RBs with highest frequencies in the CORESET of 24 RBs, or the first CORESET is a CORESET obtained by puncturing (or removing) four RBs with highest frequencies in the CORESET of 24 RBs.

In an optional manner, the CORESET of 24 RBs is a non-interleaved CORESET, or an interleaved CORESET whose quantity R of interleaved rows is 2.

In an optional manner, the frequency domain resource offset is a quantity of RBs by which a first RB is offset relative to a second RB on a frequency domain resource, where the first RB is an RB with a smallest number in the first CORESET, or the first RB is an RB with a smallest number in the CORESET of 24 RBs, and the second RB is an RB with a smallest number in an overlapping part between a synchronization signal block SSB of 12 RBs and a common RB, where the SSB of 12 RBs is an SSB determined based on an SSB of 20 RBs, or the second RB is an RB with a smallest number in an overlapping part between the SSB of 20 RBs and the common RB.

In an optional manner, the frequency domain resource offset is a quantity of RBs by which a first RB is offset relative to a second RB on a frequency domain resource, where the first RB is an RB with a lowest frequency in the first CORESET, or the first RB is an RB with a lowest frequency in the CORESET of 24 RBs, and the second RB is an RB with a lowest frequency in an overlapping part between a synchronization signal block SSB of 12 RBs and a common RB, where the SSB of 12 RBs is an SSB determined based on an SSB of 20 RBs, or the second RB is an RB with a lowest frequency in an overlapping part between the SSB of 20 RBs and the common RB.

In an optional manner, the first CORESET is a CORESET #0, or the K parameter configurations are used for CORESETs #0.

In an optional manner, the K parameter configurations are used for a channel bandwidth greater than or equal to 3 MHz, or used for a minimum channel bandwidth 3 MHz (minimum channel bandwidth 3 MHz). Optionally, the K parameter configurations or a part of the K parameter configurations may be further used for a frequency band of n100, or used for a synchronization raster of 920.73 MHz, or used for a case in which a frequency band is n100 and a PBCH transmission bandwidth is 12 RBs, or used for a case in which a PBCH transmission bandwidth is 12 RBs.

In an optional manner, the K parameter configurations are used for a channel bandwidth greater than or equal to 3 MHz, or are used for a minimum channel bandwidth 3 MHz. Optionally, the K parameter configurations or a part of the K parameter configurations may be further used for a frequency band of n100, or used for a synchronization raster of 921.45 MHz, or used for a case in which a frequency band is n100 and a PBCH transmission bandwidth is 20 RBs, or used for a case in which a PBCH transmission bandwidth is 20 RBs, or used for a channel bandwidth greater than or equal to 5 MHz, or used for a minimum channel bandwidth 5 MHz.

In an optional manner, the K parameter configurations are used for a channel bandwidth greater than or equal to 5 MHz, or are used for a minimum channel bandwidth 5 MHz. Optionally, the K parameter configurations or a part of the K parameter configurations may be further used for a frequency band of n100, or used for a synchronization raster of 921.45 MHz, or used for a case in which a frequency band is n100 and a PBCH transmission bandwidth is 20 RBs, or used for a case in which a PBCH transmission bandwidth is 20 RBs.

In an optional manner, the K parameter configurations are associated with a channel bandwidth 3 MHz, or the K parameter configurations are associated with the channel bandwidth 3 MHz and a channel bandwidth 5 MHz, or the K parameter configurations are associated with the channel bandwidth 5 MHz.

In an optional manner, the method further includes: determining the K parameter configurations based on a channel bandwidth, or determining the K parameter configurations based on the channel bandwidth and the frequency band number, or determining the K parameter configurations based on the channel bandwidth and the synchronization raster.

In an optional manner, the channel bandwidth, the frequency band number, the synchronization raster, or the PBCH transmission bandwidth is determined through a cell search process, or the channel bandwidth, the frequency band number, the synchronization raster, or the PBCH transmission bandwidth is determined based on a position of a detected synchronization signal.

In an optional manner, the first indication information is carried on a broadcast channel.

According to a second aspect, this application provides a communication method. Optionally, the method may be executed by a network device, or by a component (for example, a processor, a chip, or a chip system) used in the network device, or by a logical module or software that can implement all or some functions of the network device. The method includes:

sending first indication information, where the first indication information indicates a first parameter configuration, the first parameter configuration is one of K parameter configurations, and K is a positive integer, where any parameter configuration in the K parameter configurations includes one or more of the following parameters: a quantity of resource blocks RBs, a frequency domain resource offset, a quantity of time domain symbols, a mapping manner, a multiplexing mode, or a puncturing manner; and indicating a time-frequency resource position of a first CORESET based on the first parameter configuration.

According to the method, the first indication information may indicate one of the K parameter configurations, so that the terminal device may determine the first parameter configuration from the K parameter configurations based on the first indication information, to determine the time-frequency resource position of the first CORESET, so that signaling overheads are reduced, or more reserved items are reserved, to indicate other information, so as to reduce signaling overheads.

In an optional manner, the method further includes: determining the first indication information.

In an optional manner, the method further includes: generating a broadcast channel, where sending the first indication information includes sending the first indication information by using the broadcast channel.

In an optional manner, K is 13, 14, 15, or 16.

For detailed descriptions and beneficial effects of the K parameter configurations, the parameter included in the any parameter configuration in the K parameter configurations, the first indication information, and the first CORESET in the second aspect, refer to related descriptions of the first aspect. Details are not described herein again.

In an optional manner, a bandwidth of a CORESET is associated with a synchronization raster, or a quantity of RBs of the CORESET is associated with the synchronization raster, or the bandwidth of the CORESET is associated with a frequency band number, or the quantity of RBs of the CORESET is associated with the frequency band number.

In this manner, when the first parameter configuration corresponds to a plurality of bandwidths of a CORESET, the terminal device may determine a bandwidth of a CORESET based on an association relationship between the bandwidth of the CORESET and the synchronization raster or an association relationship between the bandwidth of the CORESET and the frequency band number.

In an optional manner, a CORESET of 24 RBs is a non-interleaved CORESET, or an interleaved CORESET whose quantity R of interleaved rows is 2.

In an optional manner, a channel bandwidth, the frequency band number, the synchronization raster, or a PBCH transmission bandwidth is determined through a cell search process, or the channel bandwidth, the frequency band number, the synchronization raster, or the PBCH transmission bandwidth is determined based on a position of a detected synchronization signal.

According to a third aspect, a communication apparatus is provided. The communication apparatus may perform the method provided in the first aspect. The communication apparatus specifically includes: a transceiver unit, configured to receive first indication information, where the first indication information indicates a first parameter configuration, the first parameter configuration is one of K parameter configurations, and K is a positive integer, where any parameter configuration in the K parameter configurations includes one or more of the following parameters: a quantity of resource blocks RBs, a frequency domain resource offset, a quantity of time domain symbols, a mapping manner, a multiplexing mode, or a puncturing manner; and a processing unit, configured to determine a time-frequency resource position of a first CORESET based on the first parameter configuration.

In an optional manner, K is 13, 14, 15, or 16.

For detailed descriptions and beneficial effects of the K parameter configurations, the parameter included in the any parameter configuration in the K parameter configurations, the first indication information, and the first CORESET in the third aspect, refer to related descriptions of the first aspect. Details are not described herein again.

In an optional manner, a bandwidth of a CORESET is associated with a synchronization raster, or a quantity of RBs of the CORESET is associated with the synchronization raster, or the bandwidth of the CORESET is associated with a frequency band number, or the quantity of RBs of the CORESET is associated with the frequency band number.

In an optional manner, the following is further included: The processing unit is further configured to determine a bandwidth of the first CORESET based on the synchronization raster or the frequency band number; or determine a quantity of RBs of the first CORESET based on the synchronization raster or the frequency band number.

In an optional manner, a CORESET of 24 RBs is a non-interleaved CORESET, or an interleaved CORESET whose quantity R of interleaved rows is 2.

In an optional manner, the following is further included: The processing unit is further configured to determine the K parameter configurations based on a channel bandwidth, or determine the K parameter configurations based on the channel bandwidth and the frequency band number, or determine the K parameter configurations based on the channel bandwidth and the synchronization raster.

In an optional manner, the channel bandwidth, the frequency band number, the synchronization raster, or a PBCH transmission bandwidth is determined through a cell search process, or the channel bandwidth, the frequency band number, the synchronization raster, or the PBCH transmission bandwidth is determined based on a position of a detected synchronization signal.

According to a fourth aspect, a communication apparatus is provided. The communication apparatus may perform the method provided in the second aspect. The communication apparatus specifically includes: a transceiver unit, configured to send first indication information, where the first indication information indicates a first parameter configuration, the first parameter configuration is one of K parameter configurations, and K is a positive integer, where any parameter configuration in the K parameter configurations includes one or more of the following parameters: a quantity of resource blocks RBs, a frequency domain resource offset, a quantity of time domain symbols, a mapping manner, a multiplexing mode, or a puncturing manner; and a processing unit, configured to indicate a time-frequency resource position of the first CORESET based on the first parameter configuration.

In an optional manner, the following is further included: The processing unit is further configured to determine the first indication information.

In an optional manner, the following is further included: The processing unit is further configured to generate a broadcast channel, where sending the first indication information includes sending the first indication information by using the broadcast channel.

In an optional manner, K is 13, 14, 15, or 16.

For detailed descriptions and beneficial effects of the K parameter configurations, the parameter included in the any parameter configuration in the K parameter configurations, the first indication information, and the first CORESET in the fourth aspect, refer to related descriptions of the first aspect. Details are not described herein again.

In an optional manner, a bandwidth of a CORESET is associated with a synchronization raster, or a quantity of RBs of the CORESET is associated with the synchronization raster, or the bandwidth of the CORESET is associated with a frequency band number, or the quantity of RBs of the CORESET is associated with the frequency band number.

In an optional manner, a CORESET of 24 RBs is a non-interleaved CORESET, or an interleaved CORESET whose quantity R of interleaved rows is 2.

In an optional manner, a channel bandwidth, the frequency band number, the synchronization raster, or a PBCH transmission bandwidth is determined through a cell search process, or the channel bandwidth, the frequency band number, the synchronization raster, or the PBCH transmission bandwidth is determined based on a position of a detected synchronization signal.

According to a fifth aspect, this application provides a communication apparatus. The communication apparatus includes a processor, and the processor is configured to run a computer program or instructions, to cause the communication apparatus to perform the method according to the first aspect or the second aspect.

In an optional manner, the communication apparatus further includes a memory. The processor is coupled to the memory, and the processor is configured to run a computer program or instructions stored in the memory, to cause the communication apparatus to perform the method according to the first aspect or the second aspect.

According to a sixth aspect, this application provides a communication apparatus. The communication apparatus includes a processor, a memory, and a transceiver, the processor is coupled to the memory, the transceiver is configured to receive and send data, and the processor is configured to implement the method according to the first aspect or the second aspect.

According to a seventh aspect, this application provides a chip. The chip includes a processor and an interface, the processor is coupled to the interface, the interface is configured to receive or output a signal, and the processor is configured to execute code instructions, so that the method according to the first aspect or the second aspect is performed.

According to an eighth aspect, this application provides a computer-readable storage medium. The computer-readable storage medium stores a computer program or instructions, and when the computer program or the instructions are run on a communication apparatus, the method according to the first aspect or the second aspect is performed.

According to a ninth aspect, this application provides a communication system. The communication system includes a first communication apparatus and a second communication apparatus. The first communication apparatus is configured to perform the method according to the first aspect, and the second communication apparatus is configured to perform the method according to the second aspect; or the first communication apparatus is the communication apparatus according to the third aspect, and the second communication apparatus is the communication apparatus according to the fourth aspect.

According to a tenth aspect, this application provides a computer program product. The computer program product includes computer instructions, and when a part or all of the computer instructions are run on a communication apparatus, a computer is caused to perform the method according to the first aspect or the second aspect.

For beneficial effects of the second aspect to the tenth aspect and the possible designs of the second aspect to the tenth aspect, refer to the beneficial effects of the first aspect and the possible designs of the first aspect.

## BRIEF DESCRIPTION OF DRAWINGS

FIG. 1 is a diagram of an architecture of a wireless communication system according to an embodiment of this application;
FIG. 2 is a diagram of a CCE-REG mapping relationship in a CORESET #0;
FIG. 3 is a diagram of a spectrum;
FIG. 4 is a diagram of puncturing of a CORESET #0;
FIG. 5 is a diagram of puncturing of a CORESET #0;
FIG. 6 is a diagram of a frequency domain resource offset;
FIG. 7 is a diagram of a frequency domain resource offset;
FIG. 8 is a diagram of a frequency domain resource offset;
FIG. 9 is a diagram of puncturing of a CORESET;
FIG. 10 is a schematic flowchart of a communication method according to this application;
FIG. 11 is a diagram of a structure of a communication apparatus according to this application;
FIG. 12 is a diagram of a structure of another communication apparatus according to this application; and
FIG. 13 is a diagram of a structure of a chip according to this application.

## DESCRIPTION OF EMBODIMENTS

Embodiments of this application provide a communication method and apparatus. The method and the apparatus have similar problem-resolving principles. Therefore, implementations of the apparatus and the method may be mutually referenced. Details are not described.

In the descriptions of this application, the terms such as "first" and "second" are merely used for differentiated description, and cannot be understood as an indication or implication of relative importance, or cannot be understood as an indication or implication of an order. It should be noted that an appearance sequence of "first", "second", and the like is not limited in this application. For example, "second" may appear first, and then "first" appears. This is not limited in this application.

In the descriptions of this application, "at least one (type)" means one (type) or more (types), and "a plurality of (types)" means two (types) or more (types). In addition, "at least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural. In the descriptions of this application, "/" represents "or". For example, a/b represents a or b.

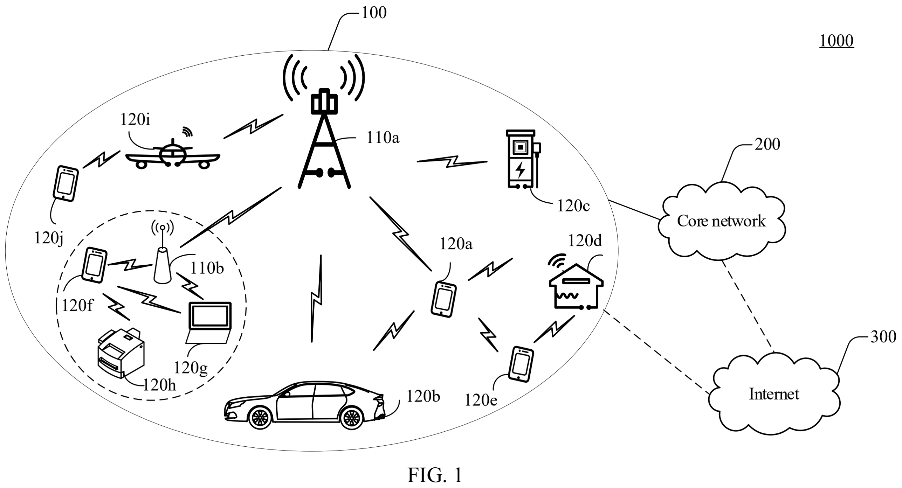

FIG. 1 is a diagram of an architecture of a communication system 1000 to which an embodiment of this application is applied. As shown in FIG. 1, the communication system includes an access network 100 and a core network 200. Optionally, the communication system 1000 may further include an internet 300. The radio access network (radio access network, RAN) 100 may include at least one RAN node (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different physical devices that are independent, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include another network device, for example, a wireless relay device and a wireless backhaul device, which are not shown in FIG. 1.

The network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented network. The RAN may alternatively be an open access network (open RAN, O-RAN, or ORAN), a cloud radio access network (cloud radio access network, CRAN), or a communication network of two or more of the foregoing networks. The RAN device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a future mobile communication system, a wireless fidelity (wireless fidelity, Wi-Fi) system, or an access node in a long range radio (long range radio, LoRa) system or an internet of vehicles system. The RAN device may alternatively be a module or unit that completes some functions of the base station, for example, a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications of the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, a remote radio unit (remote radio unit, RRU), an active antenna unit (active antenna unit, AAU), or a remote radio head (remote radio head, RRH). In different systems, the CU, the DU, or the RU may have different names, but a person skilled in the art may understand meanings of the names. For example, in an ORAN system, the CU may also be referred to as an O-CU (open CU), the DU may also be referred to as an O-DU, and an RU may also be referred to as an O-RU. Any one of the CU (or the CU-CP and the CU-UP), the DU, and the RU in this application may be implemented by a software module, a hardware module, or a combination of a software module and a hardware module. The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, a network device is used as an abbreviation of the radio access network device, and the base station is used as an example of the radio access network device.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, automatic driving, telemedicine, smart grid, smart furniture, smart office, smart wearable, smart transportation, and smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, the base station and the terminal may be collectively referred to as a communication apparatus, 110a and 110b in FIG. 1 may be referred to as a communication apparatus having a function of a base station, and 120a to 120j in FIG. 1 may be referred to as a communication apparatus having a function of a terminal.

In embodiments of this application, the function of the base station may be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. The function of the terminal may be performed by a module (for example, a chip or a modem) in the terminal, or may be performed by an apparatus including the function of the terminal.

Based on the foregoing communication system, this application provides a communication method. The following explains and describes some terms used in this application, and the terms are also used as a part of the present invention.

1. Synchronization signal and physical broadcast channel (physical broadcast channel, PBCH) block (synchronization signal and PBCH block, SSB)

A synchronization signal and a PBCH, as a whole, are referred to as an SSB. The synchronization signal is used for time synchronization, and the PBCH carries a master information block (Master Information Block, MIB). In an implementation, the SSB occupies 20 resource blocks (resource block, RB) in frequency domain.

For a cell, the MIB includes some basic configuration information of the cell, especially some parameters used for initial access, for example, configuration information of a physical downlink control channel (physical downlink control channel, PDCCH) for scheduling a system information block 1 (system information block 1, SIB1). A terminal device usually first decodes the MIB, and then continues to receive the SIB1, other broadcast information, and the like by using a parameter in the MIB.

2. Control resource set (control resource set, CORESET) and a CORESET #0

A terminal device needs to perform blind detection based on a possible time-frequency resource position of a PDCCH when receiving the PDCCH. Information such as a resource position occupied in frequency domain and/or a quantity of symbols occupied in time domain by the possible time-frequency resource position of the PDCCH is referred to as a CORESET. Information such as a start symbol of the possible time-frequency resource position of the PDCCH in time domain and a monitoring periodicity of the terminal device is referred to as search space. The terminal device may determine, with reference to the CORESET and the search space, a time-frequency resource position at which blind detection needs to be performed, to receive the PDCCH. It may be understood that the time-frequency resource position at which the terminal device needs to perform blind detection may also be referred to as the CORESET. An embodiment of this application provides a CORESET-related method, and the search space is not limited.

The CORESET #0 corresponds to a PDCCH for scheduling a SIB1, that is, a Type0-PDCCH. The terminal device has not successfully accessed when receiving the Type0-PDCCH. Therefore, the terminal device cannot obtain a parameter configuration of the CORESET #0 by using RRC signaling. The terminal device may determine the parameter configuration of the CORESET #0 by using indication information included in a MIB, and further determine a time-frequency resource position of the CORESET #0 or time-frequency resource information of the CORESET #0. In an implementation, the CORESET #0 occupies 24 RBs in frequency domain.

A PDCCH transmitted in the CORESET is a PDCCH formed by combining control channel elements (control channel element, CCE) of a specific quantity of aggregation levels according to a sequence of CCE numbers. One CCE includes six resource element groups (resource element group, REG). One REG occupies one RB in frequency domain, and occupies one orthogonal frequency division multiplexing (orthogonal frequency division multiplexing, OFDM) symbol in time domain, that is, one REG includes 12 REs. One REG bundle (REG bundle) includes L REGs. L is an integer greater than or equal to 1.

NR supports two CCE-to-REG mapping manners: non-interleaved mapping and interleaved mapping. A relationship between a CCE and an REG bundle may be described as follows:

An REG bundle i includes REGs {iL, iL + 1, ... , iL + L - 1}, where L is a quantity of REGs included in the REG bundle, i

$$i = 0, 1, ..., N_{REG}^{CORESET}/L - 1 \text{ , and } N_{REG}^{CORESET} = N_{RB}^{CORESET} N_{symb}^{CORESET}$$ is a quantity of REGs in the CORESET.

A CCE j includes REG bundles {f(6j/L), f(6j/L + 1), ..., f(6j/L + 6/L + 1)} , where f(.) is a mapping function.

In the interleaved mapping manner, a mapping function formula is:

$$f(x) = (rC + c + n_{shift}) \bmod \left( N_{REG}^{CORESET}/L \right)$$

$$x = cR + r$$

$$r = 0, 1, \dots, R - 1$$

$$c = 0, 1, \dots, C - 1$$

$$C = N_{REG}^{CORESET}/(LR)$$

Currently, a quantity of time domain symbols that is supported by the CORESET #0 is 2 or 3, and an aggregation level (aggregation level, AL) supported by the CORESET #0 is 4, 8, or 16. In a subcarrier spacing of 15 kHz and a channel bandwidth 5 MHz, the CORESET #0 includes 24 RBs. In addition, the CORESET #0 supports only CCE-REG interleaved mapping, and interleaver parameters R=2 and L=6.

For search space associated with the CORESET #0, for an aggregation level AL, a number of a CCE included in a candidate PDCCH may be given by the following formula:

$$L \cdot \left\{ \left( Y_{p,n_{s,f}^{\mu}} + \left\lfloor \frac{m_{s,n_{CI}}^{(L)} \cdot N_{CCE,p}}{L \cdot M_{s,\max}^{(L)}} \right\rfloor + n_{CI} \right) \bmod \left\lfloor N_{CCE,p}/L \right\rfloor \right\} + i$$

L·{.} is used for determining a number of a start CCE, and a value of i ranges from 0 to AL-1.

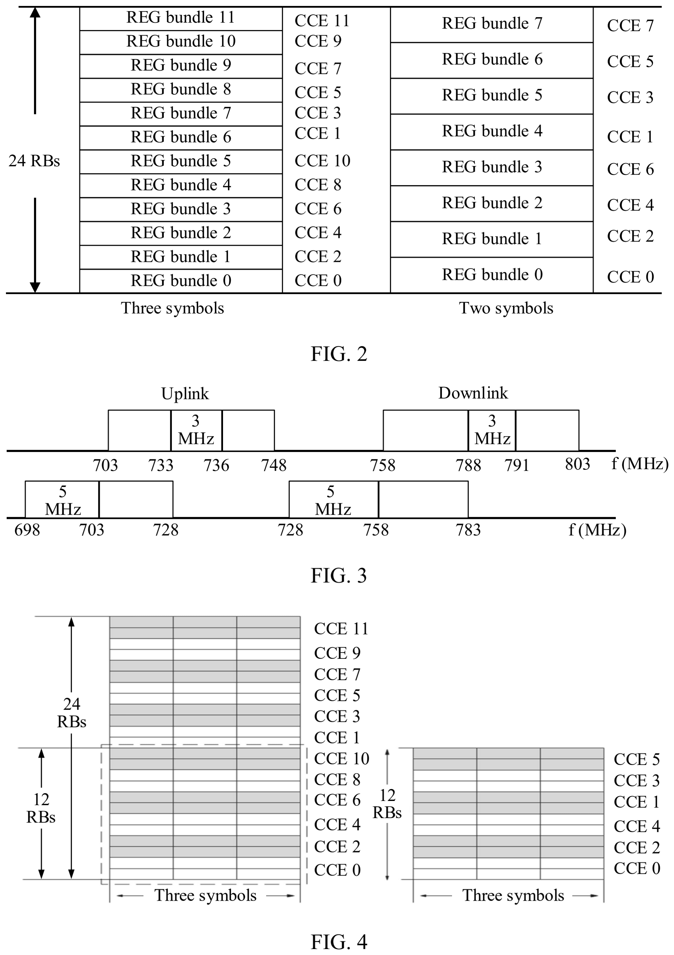

FIG. 2 is a diagram of a CCE-REG mapping relationship in a CORESET #0. When the CORESET #0 occupies 2 time domain symbols and occupies 24 RBs in frequency domain, every six REGs form one REG bundle; and a CCE 0 is mapped to a REG bundle 0, a CCE 1 is mapped to a REG bundle 4, a CCE 2 is mapped to a REG bundle 1, a CCE 3 is mapped to a REG bundle 5, ..., and a CCE 7 is mapped to a REG bundle 7. When the CORESET #0 occupies 3 time domain symbols and occupies 24 RBs in frequency domain, every six REGs form one REG bundle; and a CCE 0 is mapped to a REG bundle 0, a CCE 1 is mapped to a REG bundle 6, a CCE 2 is mapped to a REG bundle 1, a CCE 3 is mapped to a REG bundle 7, ..., and a CCE 11 is mapped to a REG bundle 11.

3. Private network spectrum

FIG. 3 is a diagram of a spectrum. To implement NR communication on a private network spectrum, a channel bandwidth may be 3 MHz or 5 MHz. In a 3 MHz channel, a quantity of available RBs of the channel may be 12 or 15. In a 5 MHz channel, a quantity of available RBs of the channel may be 20.

In such a narrow channel bandwidth, the quantity of available RBs of the channel is limited, and consequently a network may fail to send the foregoing complete SSB or CORESET #0.

4. Puncturing (puncturing)

To adapt to a channel bandwidth of a private network spectrum or a quantity of available RBs of a channel, a possible manner is to puncture (or truncate) an SSB or a CORESET #0. For example, the SSB is punctured to obtain an SSB of 12 RBs, and the CORESET #0 is punctured to obtain a CORESET #0 of 15 RBs or a CORESET #0 of 20 RBs. The SSB of 12 RBs is applicable to a 3 MHz channel and a 5 MHz channel, the CORESET #0 of 15 RBs is applicable to a channel with 15 available RBs in 3 MHz channels and a 5 MHz channel, and the CORESET #0 of 20 RBs is applicable to a 5 MHz channel.

In another possible manner, an SSB or a CORESET #0 that is adapted to the channel bandwidth of the private network spectrum or the quantity of available RBs of the channel may be directly determined without puncturing. For example, a CORESET #0 of 12 RBs may be directly determined, where the CORESET #0 of 12 RBs is applicable to a 3 MHz channel, including a channel with 15 available RBs and a channel with 12 available RBs, and is also applicable to a 5 MHz channel. FIG. 4 is a diagram of puncturing of a CORESET #0. A CORESET #0 obtained after puncturing is different from a directly determined CORESET #0 in CCE index distribution. In FIG. 4, an example in which the CORESET #0 occupies three time domain symbols is used. CCEs in the CORESET #0 obtained after puncturing are a CCE 0, a CCE 2, a CCE 4, a CCE 6, a CCE 8, and a CCE 10 in ascending order of frequencies, and CCEs in the directly determined CORESET #0 are a CCE 0, a CCE 2, a CCE 4, a CCE 1, a CCE 3, and a CCE 5 in ascending order of frequencies.

In a possible implementation, to adapt to a channel bandwidth 3 MHz, an SSB of 20 RBs may be punctured to obtain an SSB of 12 RBs, and a CORESET #0 of 24 RBs is punctured to obtain a CORESET #0 of 15 RBs, or a CORESET #0 of 12 RBs is directly determined. To adapt to a channel bandwidth 5 MHz, an SSB of 20 RBs may be punctured to obtain an SSB of 12 RBs, and a CORESET #0 of 24 RBs may be punctured to obtain a CORESET #0 of 20 RBs. In the following example, unless otherwise specified, the CORESET of 24 RBs is a CORESET before puncturing, the CORESET of 15 RBs or 20 RBs is a CORESET obtained after puncturing, the CORESET of 12 RBs is a directly determined CORESET, the SSB of 20 RBs is an SSB before puncturing, and the SSB of 12 RBs is an SSB obtained after puncturing.

It should be understood that embodiments of this application protect a result obtained after puncturing, and a network device or a terminal device may not perform a puncturing action. An SSB (or a CORESET #0) before puncturing may be understood as the foregoing complete SSB (or CORESET #0). An SSB (or a CORESET #0) obtained after puncturing may be understood as an SSB (or a CORESET #0) determined based on the SSB (or CORESET #0) before puncturing, or may be understood as a part in the SSB (or CORESET #0) before puncturing. A network may perform sending based on the SSB (or CORESET #0) before puncturing, and the terminal device may perform receiving based on the SSB (or CORESET #0) obtained after puncturing. Certainly, the network may alternatively perform sending based on the SSB (or CORESET #0) obtained after puncturing.

In a possible implementation, the SSB obtained after puncturing may be a continuous part in frequency domain in the SSB before puncturing. Specifically, the SSB obtained after puncturing may be a part in the SSB before puncturing, with $a_1$ RBs with highest frequencies and a2 RBs with lowest frequencies removed, where $a_1$ and $a_2$ are integers greater than or equal to 0, and a sum of $a_1$ and $a_2$ is equal to a difference between a quantity of RBs of the SSB before puncturing and a quantity of RBs of the SSB obtained after puncturing. Further, the SSB obtained after puncturing may be a part centered in frequency domain in the SSB before puncturing, that is, $a_1$ is equal to $a_2$. For example, the SSB before puncturing is an SSB of 20 RBs, and the SSB obtained after puncturing is an SSB of 12 RBs. In an implementation, the SSB of 12 RBs is a part in the SSB of 20 RBs with four RBs with highest frequencies and four RBs with lowest frequencies removed. Specifically, the SSB of 12 RBs may occupy subcarriers whose subcarrier numbers are 48 to 191, or the terminal device does not expect to receive an SSB on subcarriers whose subcarrier numbers are 0 to 47 and 192 to 239.

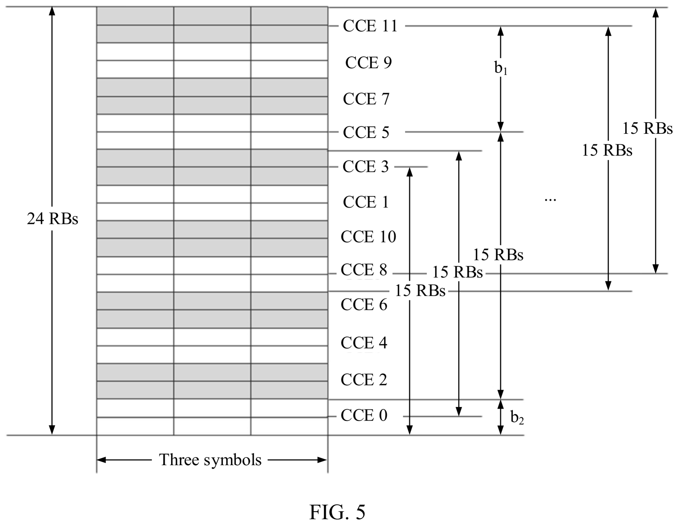

In a possible implementation, the CORESET #0 obtained after puncturing may be a continuous part in frequency domain in the CORESET #0 before puncturing. Specifically, the CORESET #0 obtained after puncturing may be a part in the CORESET #0 before puncturing, with $b_1$ RBs with highest frequencies and $b_2$ RBs with lowest frequencies removed, where bi and $b_2$ are integers greater than or equal to 0, and a sum of $b_1$ and $b_2$ is equal to a difference between a quantity of RBs of the CORESET #0 before puncturing and a quantity of RBs of the CORESET #0 obtained after puncturing. Combinations of different values of $b_1$ and different values of $b_2$ may correspond to different puncturing manners. FIG. 5 is used as an example. FIG. 5 is a diagram of puncturing of a CORESET #0. In FIG. 5, an example in which a CORESET #0 occupies three time domain symbols is used. A CORESET #0 before puncturing is a CORESET #0 of 24 RBs, and a CORESET #0 obtained after puncturing is a CORESET #0 of 15 RBs. The CORESET #0 of 15 RBs is a part in the CORESET #0 of 24 RBs with $b_1$ RBs with highest frequencies and $b_2$ RBs with lowest frequencies removed. Values of $b_1$ and $b_2$ are integers ranging from 0 to 9, and a sum of $b_1$ and $b_2$ is 9. There are 10 possible combinations of values of $b_1$ and values of $b_2$, that is, there are a maximum of 10 possible puncturing manners. It may be understood that the puncturing manner of the CORESET #0 is also applicable to another quantity of time domain symbols, for example, 2, or another type of CORESET. In another example, the CORESET #0 before puncturing is a CORESET #0 of 24 RBs, and the CORESET #0 obtained after puncturing is a CORESET #0 of 20 RBs. Values of $b_1$ and $b_2$ are integers ranging from 0 to 4, and a sum of $b_1$ and $b_2$ is 4. There are 5 possible combinations of values of $b_1$ and values of $b_2$, that is, there are a maximum of 5 possible puncturing manners.

In embodiments of this application, for a CORESET (or an SSB) that needs to be punctured, a bandwidth of the CORESET (or SSB) is a quantity of RBs after puncturing, and a CORESET corresponding to a parameter configuration is a CORESET obtained after puncturing; and for a CORESET (or an SSB) that does not need to be punctured, a bandwidth of the CORESET (or SSB) and a quantity of RBs actually occupied by the CORESET (or SSB) correspond to a same quantity of physical resources. Unless otherwise specified, a quantity of RBs in the following descriptions may be a quantity of RBs before puncturing, or may be a quantity of RBs after puncturing. This is not limited.

To adapt to a channel bandwidth of a private network spectrum, a new parameter configuration set needs to be designed, to indicate or determine a time-frequency resource position of a CORESET #0. However, indicating all possible combinations of parameter values causes excessively high signaling overheads.

In embodiments of this application, to save signaling resources, a new parameter configuration set is provided, to indicate or determine a time-frequency resource position of a CORESET #0. Further, a parameter configuration set provided in embodiments of the present invention may further indicate or determine a time-frequency resource position of another type of CORESET, or be used for another channel bandwidth, to resolve a problem that signaling overheads are excessively high because there are an excessively large quantity of possible combinations of parameter values.

The parameter configuration set provided in embodiments of this application includes K parameter configurations, and K is a positive integer. Optionally, K is less than or equal to a first threshold, and the first threshold is $2^N$, where N is a positive integer. Specifically, N may be 4, and K may be 13, 14, 15, or 16. A network device may indicate one of the K parameter configurations to a terminal device by using first indication information. In a possible implementation, the first indication information may be of N bits, different status values of the N bits indicate different parameter configurations, and the different status values of the N bits may be understood as indexes of different parameter configurations. The N-bit first indication information corresponds to $2^N$ status values, and the first indication information indicates the K parameter configurations. K may be equal to $2^N$, that is, each status value may correspond to one parameter configuration. Alternatively, K may be less than $2^N$, that is, some status values are reserved without indicating any parameter configuration.

Any parameter configuration in the K parameter configurations includes one or more of the following parameters, or the any parameter configuration in the K parameter configurations may consist of one or more of the following parameters: a quantity of RBs, a frequency domain resource offset, a quantity of time domain symbols, a mapping manner, or a puncturing manner.

The following separately describes the foregoing parameters:

Quantity of RBs

The quantity of RBs is a quantity of resources occupied by a CORESET in frequency domain in a form of an RB. The quantity of RBs may be a quantity of RBs before the CORESET is punctured, or may be a quantity of RBs after the CORESET is punctured (that is, a bandwidth of the CORESET).

A value of the quantity of RBs may correspond to the bandwidth of the CORESET. If the quantity of RBs is the quantity of RBs before the CORESET is punctured, the value of the quantity of RBs is different from the bandwidth of the CORESET. If the quantity of RBs is the quantity of RBs after the CORESET is punctured, or if the CORESET is not punctured, the value of the quantity of RBs is the same as the bandwidth of the CORESET.

In an example, a possible value of the quantity of RBs is 24 or 12. A bandwidth of the CORESET corresponding to the quantity of RBs being 24 is 15 RBs and/or 20 RBs. A bandwidth of the CORESET corresponding to the quantity of RBs being 12 is 12 RBs.

In another example, a possible value of the quantity of RBs is 24. A bandwidth of the CORESET corresponding to the quantity of RBs being 24 is 20 RBs and/or 24 RBs. Alternatively, a bandwidth of the CORESET corresponding to the quantity of RBs being 24 is 20 RBs and/or 15 RBs.

In another example, a possible value of the quantity of RBs is 15 or 12. A bandwidth of the CORESET corresponding to the quantity of RBs being 15 is 15 RBs. A bandwidth of the CORESET corresponding to the quantity of RBs being 12 is 12 RBs.

In another example, a possible value of the quantity of RBs is 20, 15, or 12. A bandwidth of the CORESET corresponding to the quantity of RBs being 20 is 20 RBs. A bandwidth of the CORESET corresponding to the quantity of RBs being 15 is 15 RBs. A bandwidth of the CORESET corresponding to the quantity of RBs being 12 is 12 RBs.

In another example, a possible value of the quantity of RBs is 20 or 15. A bandwidth of the CORESET corresponding to the quantity of RBs being 20 is 20 RBs. A bandwidth of the CORESET corresponding to the quantity of RBs being 15 is 15 RBs.

Frequency domain resource offset

The frequency domain resource offset (or a frequency domain resource offset of a CORESET relative to an SSB) is a quantity of RBs by which a first RB is offset relative to a second RB in frequency domain. The first RB is an RB with a smallest number in a CORESET obtained after puncturing, or the first RB is an RB with a smallest number in a CORESET before puncturing. The second RB is an RB with a smallest number in an overlapping part between an SSB obtained after puncturing and a common RB, or the second RB is an RB with a smallest number in an overlapping part between an SSB without being puncturing and the common RB. RB numbers are sorted in ascending order of RB frequencies. Alternatively, the smallest number may be replaced with a lowest frequency.

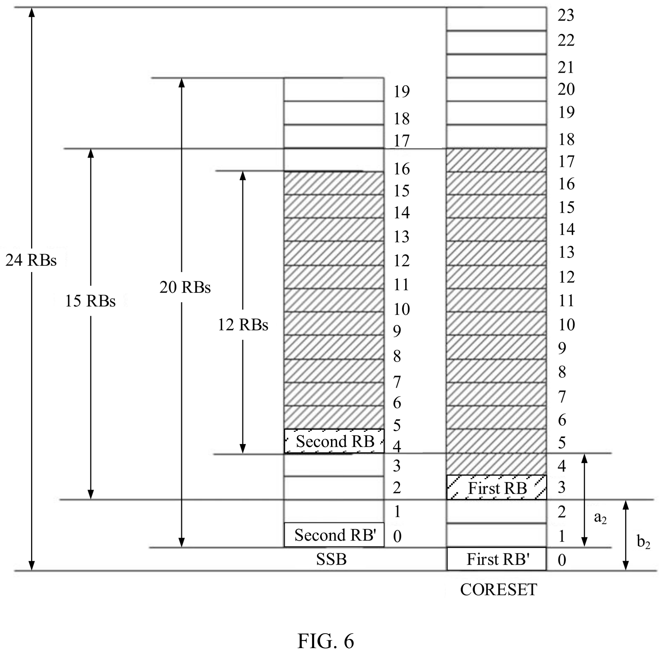

FIG. 6 is used as an example. FIG. 6 is a diagram of a frequency domain resource offset. In the accompanying drawings provided in embodiments of this application, frequencies are in an ascending order from bottom to top. In FIG. 6, an SSB before puncturing is an SSB of 20 RBs, and an SSB obtained after puncturing is an SSB of 12 RBs. In the SSB of 20 RBs, $a_2$=4 RBs with low frequencies are removed, and ai=4 RBs with high frequencies are removed. A right side of the SSB is an example of relative RB numbers which are numbered 0 to 19 in ascending order of RB frequencies, where RBs numbered 4 to 15 are RBs occupied by the SSB obtained after puncturing. A CORESET before puncturing is a CORESET of 24 RBs, and a CORESET obtained after puncturing is a CORESET of 15 RBs. In the CORESET of 24 RBs, $b_2=3$ RBs with low frequencies are removed, and bi=6 RBs with high frequencies are removed. A right side of the CORESET is an example of relative RB numbers which are numbered 0 to 23 in ascending order of RB frequencies, where RBs numbered 3 to 17 are RBs occupied by the CORESET obtained after puncturing. It should be understood that RB numbering in FIG. 6 is merely an example, and there may be another numbering manner. For example, the SSB and the CORESET are numbered together, or numbering is performed starting from an absolute position of a physical RB. In FIG. 6, a first RB is an RB with a smallest number in the CORESET of 15 RBs, that is, a position marked with the first RB (an RB numbered 3 in the CORESET) in the figure, or the first RB is an RB with a smallest number in the CORESET of 24 RBs, that is, a position marked with a first RB' (an RB numbered 0 in the CORESET) in the figure. A second RB is an RB with a smallest number in an overlapping part between the SSB of 12 RBs and a common RB, that is, a position marked with the second RB (an RB numbered 4 in the SSB) in the figure, or the second RB is an RB with a smallest number in an overlapping part between the SSB of 20 RBs and the common RB, that is, a position marked with a second RB' (an RB numbered 0 in the SSB) in the figure.

- If the first RB is an RB with a smallest number in the CORESET obtained after puncturing, that is, the position marked with the first RB in the figure, and the second RB is an RB with a smallest number in the overlapping part between the SSB obtained after puncturing and the common RB, that is, the position marked with the second RB in the figure, the frequency domain resource offset is 2.
- If the first RB is an RB with a smallest number in the CORESET obtained after puncturing, that is, the position marked with the first RB in the figure, and the second RB is an RB with a smallest number in the overlapping part between the SSB before puncturing and the common RB, that is, the position marked with the second RB' in the figure, the frequency domain resource offset is -2.
- If the first RB is an RB with a smallest number in the CORESET before puncturing, that is, the position marked with the first RB' in the figure, and the second RB is an RB with a smallest number in the overlapping part between the SSB obtained after puncturing and the common RB, that is, the position marked with the second RB in the figure, the frequency domain resource offset is 5.
- If the first RB is an RB with a smallest number in the CORESET before puncturing, that is, the position marked with the first RB' in the figure, and the second RB is an RB with a smallest number in the overlapping part between the SSB before puncturing and the common RB, that is, the position marked with the second RB' in the figure, the frequency domain resource offset is 1.

Optionally, the first RB is an RB with a smallest number in the CORESET obtained after puncturing, and the second RB is an RB with a smallest number in the overlapping part between the SSB obtained after puncturing and the common RB. In this way, a terminal device may directly determine, by detecting a position of the SSB obtained after puncturing, a frequency domain position of the CORESET obtained after puncturing, without converting the frequency domain resource offset, to reduce implementation complexity of the terminal device. The following uses the optional solution as an example for description. It is assumed that a value of the frequency domain resource offset in the optional solution is c. Using FIG. 6 as an example, the value c of the frequency domain resource offset is 2.

- If the first RB is an RB with a smallest number in the CORESET obtained after puncturing, and the second RB is an RB with a smallest number in the overlapping part between the SSB before puncturing and the common RB, the frequency domain resource offset may be replaced with c-a2. Using FIG. 6 as an example, the frequency domain resource offset may be replaced with c-4.
- If the first RB is an RB with a smallest number in the CORESET before puncturing, and the second RB is an RB with a smallest number in the overlapping part between the SSB obtained after puncturing and the common RB, the frequency domain resource offset may be replaced with c+b2. Using FIG. 6 as an example, the frequency domain resource offset may be replaced with c+3.
- If the first RB is an RB with a smallest number in the CORESET before puncturing, and the second RB is an RB with a smallest number in the overlapping part between the SSB before puncturing and the common RB, the frequency domain resource offset may be replaced with c-a2+b2. Using FIG. 6 as an example, the frequency domain resource offset may be replaced with c-1.

The frequency domain resource offset may be limited by a channel bandwidth or a quantity of available RBs of a channel. In other words, the SSB and the CORESET determined based on the frequency domain resource offset cannot occupy more RBs as a whole in frequency domain than the channel bandwidth or the quantity of available RBs of the channel.

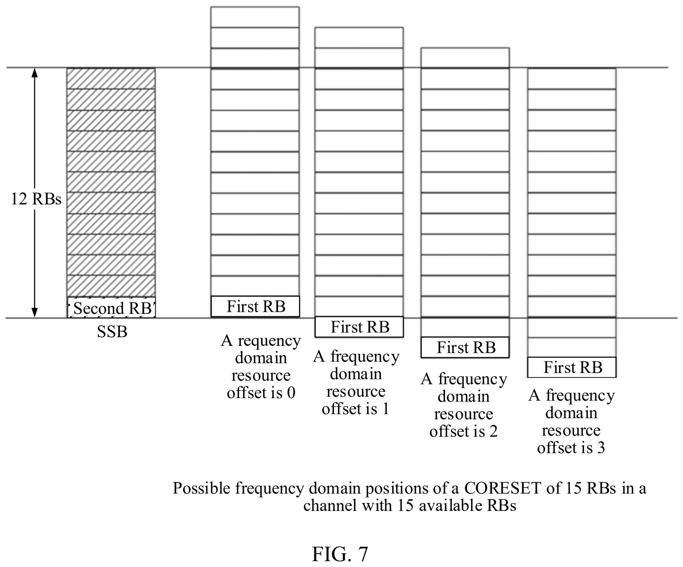

FIG. 7 is used as an example. FIG. 7 is a diagram of a frequency domain resource offset. In FIG. 7, an SSB is an SSB of 12 RBs, and a CORESET is a CORESET of 15 RBs. The CORESET of 15 RBs in a channel with 15 available RBs has four possible frequency domain positions, which respectively correspond to frequency domain resource offsets 0, 1, 2, and 3. In other words, a frequency domain resource offset corresponding to a parameter configuration with a quantity of RBs being 24 or 15 may be 0, 1, 2, or 3.

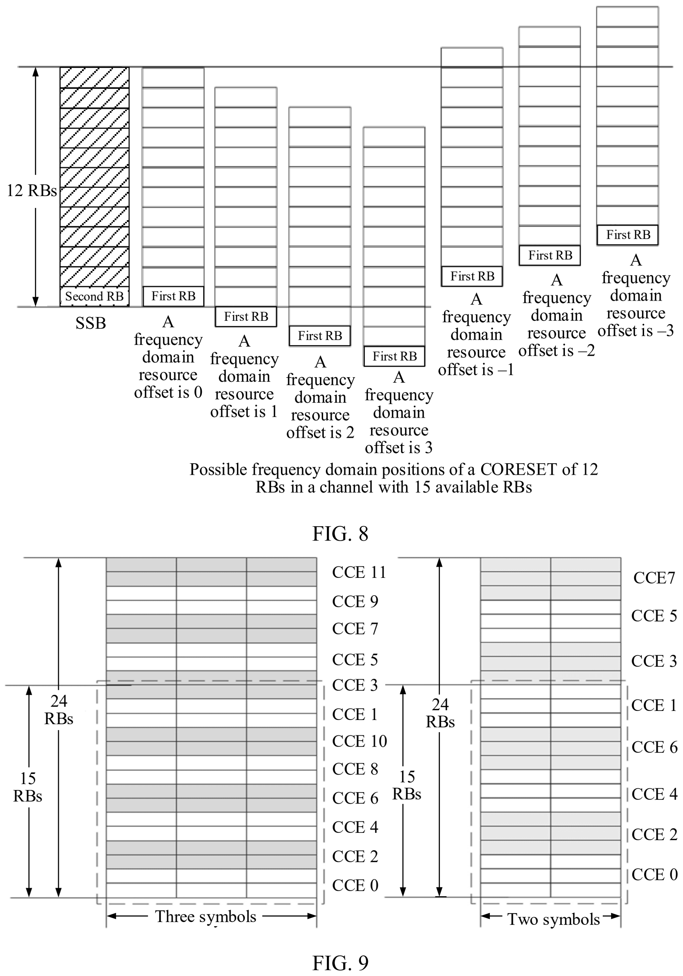

FIG. 8 is used as an example. FIG. 8 is a diagram of a frequency domain resource offset. In FIG. 8, an SSB is an SSB of 12 RBs, and a CORESET is a CORESET of 12 RBs. The CORESETs of 12 RBs in a channel with 15 available RBs has seven possible frequency domain positions, which respectively correspond to frequency domain resource offsets -3, -2, -1, 0, 1, 2, and 3. In other words, a frequency domain resource offset corresponding to a parameter configuration with a quantity of RBs being 12 may be -3, -2, -1, 0, 1, 2, or 3.

In another example, the SSB is an SSB of 12 RBs, and the CORESET is a CORESET of 12 RBs. The CORESET of 12 RBs in a channel with 12 available RBs has one possible frequency domain position, which corresponds to a frequency domain resource offset 0.

In another example, the SSB is an SSB of 12 RBs, and the CORESET is a CORESET of 20 RBs. The CORESETs of 20 RBs in a channel with 20 available RBs has nine possible frequency domain positions, which respectively correspond to frequency domain resource offsets 0, 1, 2, 3, 4, 5, 6, 7, and 8. Alternatively, the SSB is an SSB of 20 RBs, and the CORESET is a CORESET of 20 RBs. The CORESET of 20 RBs in a channel with 20 available RBs has one possible frequency domain position, which corresponds to frequency domain resource offset 0.

Quantity of time domain symbols

The quantity of time domain symbols (or a quantity of time domain symbols of a CORESET) is a quantity of resources occupied by the CORESET in time domain in a form of an OFDM symbol.

In an example, a value of the quantity of time domain symbols is 2 or 3.

Mapping manner (or mapping mode)

The mapping manner is the foregoing CCE-to-REG (CCE-to-REG) mapping manner. In an example, the mapping manner may be one of an interleaved manner or a non-interleaved manner.

Optionally, a mapping manner corresponding to a parameter configuration with a quantity of RBs being 12 is the interleaved manner.

Puncturing manner (or puncturing mode)

The puncturing manner (or a puncturing manner of a CORESET) includes different puncturing manners corresponding to the foregoing combinations of different values of $b_1$ and different values of $b_2$. A specific puncturing manner may be predefined. For example, the specific puncturing manner is specified in a protocol, or values of $b_1$ and $b_2$ are specified in a protocol. Alternatively, a puncturing manner may be indicated by a network. For example, the network sends first information, and correspondingly, a terminal receives the first information, where the first information indicates a puncturing manner, or the first information indicates values of $b_1$ and $b_2$. The first information may be one of parameters included in any parameter configuration in the K parameter configurations, or the first information may be information other than a parameter included in the any parameter configuration in the K parameter configurations. The first information may indicate a puncturing manner from all possible puncturing manners, or may indicate a puncturing manner from several specific puncturing manners. Optionally, the several specific puncturing manners may be specified in a protocol.

Optionally, it may be predefined that a CORESET obtained after puncturing is a part with a lowest frequency in a CORESET before puncturing. In other words, it may be specified that $b_1$ is a difference between a quantity of RBs of the CORESET before puncturing and a quantity of RBs of the CORESET obtained after puncturing, and it is specified that $b_2$ is 0. In this way, CCE fragmentation caused by puncturing, that is, incomplete CCEs at both ends of a frequency domain resource, can be avoided. In addition, a CCE with a low frequency is reserved, so that one terminal can directly communicate with both a network on which a CORESET is punctured and a network on which a CORESET is not punctured. This is because in the puncturing manner of reserving the CCE with a low frequency, for the CORESET that is punctured and the CORESET that is not punctured, frequency domain resource offsets indicated by the network are consistent, or frequency domain positions of the foregoing first RB are consistent. In other words, the terminal device does not need to adjust a time-frequency resource range for decoding in two processes of decoding the CORESET that is punctured and the CORESET that is not punctured. For example, the CORESET before puncturing is a CORESET of 24 RBs, and the CORESET obtained after puncturing is a CORESET of 15 RBs. The CORESET of 15 RBs may be 15 RBs with lowest frequencies in the CORESET of 24 RBs. In other words, the CORESET of 15 RBs may be obtained by puncturing nine RBs with highest frequencies in the CORESET of 24 RBs.

Optionally, it may be predefined that a CORESET obtained after puncturing is a part with a highest frequency in a CORESET before puncturing. In other words, it may be specified that $b_2$ is a difference between a quantity of RBs of the CORESET before puncturing and a quantity of RBs of the CORESET obtained after puncturing, and it is specified that $b_1$ is 0. In this way, CCE fragmentation caused by puncturing, that is, incomplete CCEs at both ends of a frequency domain resource, can be avoided. In another optional manner, the foregoing two puncturing manners may be used as specific puncturing manners, and one of the puncturing manners is indicated by the network.

In NR, one RB occupies 12 subcarriers in frequency domain. The quantity of RBs and the frequency domain resource offset are in a form of an RB, and the parameters may alternatively be in a form of another frequency domain resource. This is not limited in this application. The quantity of time domain symbols is in a form of an OFDM symbol, and this parameter may alternatively be in a form of another time domain resource. This is not limited in this application.

The K parameter configurations provided in embodiments of the present invention have one or more of the following optional features:

A first optional feature is that bandwidths of CORESETs corresponding to the K parameter configurations each are less than 24 RBs. Specifically, the bandwidths of the CORESETs corresponding to the K parameter configurations include one or more of 12 RBs, 15 RBs, and 20 RBs. For example, the bandwidths of the CORESETs corresponding to the K parameter configurations include 12 RBs and 15 RBs.

A second optional feature is that frequency domain resource offsets corresponding to the K parameter configurations each are a value in a first value set, where a quantity of values in the first value set is greater than 3. In this way, the K parameter configurations can support more frequency domain resource offsets, that is, support more frequency domain positions of CORESETs, to support flexible network deployment. Supporting flexible network deployment may be understood as that, when the network is deployed at various possible positions (or when a signal and/or a channel in the network is located at various possible positions), a corresponding parameter configuration in the K parameter configurations may indicate a frequency domain position of a CORESET that complies with a system bandwidth, a channel bandwidth, or a quantity of available RBs of a channel.

A third optional feature is that a frequency domain resource offset corresponding to a parameter configuration with a quantity of RBs being x1 in the K parameter configurations is a first value, or is a value in a second value set. For combinations of different values of x1, different values of the first value, or different second value sets, x1, the first value, and the second value set may be used as separate optional features, and may be combined with each other. Further, when a quantity of RBs occupied by a CORESET corresponding to the parameter configuration with a quantity of RBs being x1 in the K parameter configurations is the same as a quantity of RBs occupied by an SSB in frequency domain, the first value may be 0, or a value of the first value may cause the SSB and the CORESET to occupy same RBs in frequency domain. In this way, a quantity of RBs occupied by the CORESET and the SSB as a whole can support various possible deployment positions of a channel in frequency domain, to support flexible channel deployment. In addition, the CORESET and the SSB occupy same RBs, and the terminal device does not need to adjust a receiving frequency when receiving PDCCHs on the SSB and the CORESET, to reduce implementation complexity of the terminal device.

In a possible example, x1 may be one of 12, 24, 15, or 20, the first value may be one of possible values of the frequency domain resource offset, and the second value set may be multiple of possible values of the frequency domain resource offset.

In an example, x1 may be 12, and the first value may be 0. In other words, a frequency domain resource offset corresponding to a parameter configuration with a quantity of RBs being 12 in the K parameter configurations is 0, that is, the SSB and the CORESET are aligned in frequency domain. An example may be a possible frequency domain position of a 1st CORESET from left to right in FIG. 8. In this way, when the SSB is 12 RBs, a quantity of RBs occupied by a CORESET of 12 RBs and the SSB as a whole is 12, which can support various possible deployment positions of a channel with 12 available RBs or a channel with 15 available RBs in frequency domain, to support flexible channel deployment. In addition, the CORESET of 12 RBs and the SSB occupy same RBs, and the terminal device does not need to adjust a receiving frequency when receiving PDCCHs on the SSB and the CORESET, to reduce implementation complexity of the terminal device.

In an example, x1 may be 20 or 24, and the first value may be 0. In other words, a frequency domain resource offset corresponding to a parameter configuration with a quantity of RBs being 20 or 24 in the K parameter configurations is 0. Alternatively, x1 may be 20 or 24, and the second value set may be 0, 1, 2, and 3. In other words, the second value set may be some or all possible values of a frequency domain resource offset corresponding to a parameter configuration with a quantity of RBs being 15 or 24 in the K parameter configurations.

A fourth optional feature is that a quantity of time domain symbols that corresponds to a parameter configuration with a quantity of RBs being x2 in the K parameter configurations is a second value, or is a value in a third value set. For combinations of different values of x2, different values of the second value, or different third value sets, x2, the second value, and the third value set may be used as separate optional features, and may be combined with each other. Further, the second value may be a largest value in possible values of the time domain symbol. In this way, a CORESET may include more physical resources or more CCEs, so that a PDCCH can be sent to more users in the CORESET, to support a higher system capacity.

In a possible example, x2 may be one of 12, 24, 15, or 20, the second value may be one of possible values of the quantity of time domain symbols, and the second value set may be multiple of possible values of the quantity of time domain symbols. Specifically, a possible value of the time domain symbol is 2 or 3.

In an example, x2 may be 12 and/or 24, and the second value may be 3. In other words, a quantity of time domain symbols that corresponds to a parameter configuration with a quantity of RBs being 12 and/or a parameter configuration with a quantity of RBs being 24 in the K parameter configurations is 3. In this way, a CORESET may include more physical resources or more CCEs, so that a PDCCH can be sent to more users in the CORESET, to support a higher system capacity.

A fifth optional feature is that a quantity of time domain symbols that corresponds to a parameter configuration with a quantity of RBs being x3 and a mapping manner being interleaved in the K parameter configurations is a third value, or is a value in a fourth value set. For combinations of different values of x3, different values of the third value, or different fourth value sets, x3, the third value, and the fourth value set may be used as separate optional features, and may be combined with each other. Further, when a CORESET corresponding to a parameter configuration with a quantity of RBs being x3 in the K parameter configurations is a CORESET obtained after puncturing, and a mapping manner is interleaved, the third value may be a largest value in possible values of the time domain symbol. In this way, in the interleaved mapping manner, the CORESET obtained after puncturing may include more CCEs with consecutive numbers, so that a higher AL can be supported, and receiving performance of a PDCCH is improved.

In a possible example, x3 may be one of 24, 15, or 20, the third value may be one of possible values of the quantity of time domain symbols, and the fourth value set may be multiple of possible values of the quantity of time domain symbols. Specifically, a possible value of the time domain symbol is 2 or 3.

In an example, x3 may be 24, and the third value may be 3. In other words, a quantity of time domain symbols that corresponds to a parameter configuration with a quantity of RBs being 24 and a mapping manner being interleaved in the K parameter configurations is 3. Alternatively, x3 may be 15 or 20, and the third value may be 3. In other words, a quantity of time domain symbols that corresponds to a parameter configuration with a quantity of RBs being 15 or 20 and a mapping manner being interleaved in the K parameter configurations is 3. In this way, in the interleaved mapping manner, the CORESET obtained after puncturing may include more CCEs with consecutive numbers, so that a higher AL can be supported, and receiving performance of a PDCCH is improved. FIG. 9 is a diagram of puncturing of a CORESET. In FIG. 9, a CORESET before puncturing is a CORESET of 24 RBs, and a CORESET obtained after puncturing is a CORESET of 15 RBs and is 15 RBs with lowest frequencies in the CORESET of 24 RBs. The CORESET that is obtained after puncturing and whose quantity of time domain symbols is 3 includes a CCE 0, a CCE 1, a CCE 2, and half of a CCE 3, a CCE 4, a CCE 6, a CCE 8, and a CCE 10. The CORESET that is obtained after puncturing and whose quantity of time domain symbols is 2 includes a CCE 0, a CCE 1, a CCE 2, a CCE 4, and a CCE 6. For example, when AL is 4, in the CORESET that is obtained after puncturing and whose quantity of time domain symbols is 3, a terminal device may receive a PDCCH on the CCE 0, the CCE 1, the CCE 2, and half of the CCE 3. In the CORESET that is obtained after puncturing and whose quantity of time domain symbols is 3, the terminal device can receive the PDCCH only on the CCE 0, the CCE 1, and the CCE 2. It can be learned that better receiving performance can be obtained by using the quantity 3 of time domain symbols.

A sixth optional feature is that one parameter configuration in the K parameter configurations corresponds to bandwidths of a plurality of CORESET, or one parameter configuration in the K parameter configurations corresponds to values of a plurality of quantities of RBs. In this way, the plurality of bandwidths of the CORESET or the values of the plurality of quantities of RBs may share one parameter configuration, to reduce signaling resources.

Further, a bandwidth of a CORESET is associated with a synchronization raster, or a quantity of RBs of the CORESET is associated with the synchronization raster, or the bandwidth of the CORESET is associated with a frequency band number, or the quantity of RBs of the CORESET is associated with the frequency band number. In this way, when first indication information received by the terminal device indicates configuration parameters corresponding to the plurality of bandwidths of the CORESET, the terminal device may determine a bandwidth of a CORESET based on an association relationship. Similarly, the bandwidth of the CORESET may be replaced with the quantity of RBs.

The association relationship may be a predefined association relationship, as specified in a protocol, or may be an association relationship indicated by a network. Specifically, the association relationship may be that the bandwidth of the CORESET is in one-to-one correspondence with the synchronization raster, or may be that the bandwidth of the CORESET is in one-to-one correspondence with the frequency band number. For example, a bandwidth of a CORESET corresponding to a synchronization raster of 920.73 MHz is 12 RBs, or a bandwidth of a CORESET corresponding to a frequency band number n100 is 12 RBs. A bandwidth of a CORESET corresponding to another synchronization raster or frequency band number is 15 RBs. For another example, a bandwidth of a CORESET corresponding to a synchronization raster of 921.45 MHz is 20 RBs, or a bandwidth of a CORESET corresponding to a frequency band number n100 is 20 RBs. Similarly, the bandwidth of the CORESET may be replaced with the quantity of RBs.

A seventh optional feature is that a mapping manner corresponding to a parameter configuration with a quantity of RBs being x4 in the K parameter configurations is a first mapping manner. For combinations of different values of x4 and different first mapping manners, x4 and the first mapping manner may be used as separate optional features, and may be combined with each other. In a possible example, x4 may be one of 12, 24, 15, or 20, and the first mapping manner is interleaved or the first mapping manner is non-interleaved.

The foregoing optional features may be randomly combined, or may be separately used as features of the foregoing K parameter configurations. Specifically, the K parameter configurations provided in embodiments of the present invention may have one, some, or all of the foregoing optional features.

A correspondence in embodiments of this application may be understood as that a parameter configuration corresponds to a parameter in the parameter configuration, or a first parameter in a parameter configuration corresponds to a second parameter in the parameter configuration, or a parameter configuration corresponds to a bandwidth of a CORESET (or the CORESET) that can be determined based on the parameter configuration, or a parameter corresponds to a value of the parameter, or may be understood as another correspondence that can be used for establishing a relationship. This is not limited in this application.

Each parameter configuration corresponds to a group of parameter values. Therefore, a table is used for describing the correspondence. Each parameter configuration is represented by an index value, that is, each parameter configuration or each group of parameter values corresponds to an index value. In addition to the foregoing parameters, each parameter configuration may further correspond to a multiplexing mode (or a multiplexing mode of an SSB and a CORESET). Optionally, the multiplexing mode indicates time division multiplexing of the SSB and the CORESET. Specifically, the multiplexing mode may be indicated as a mode 1. There are $2^N$ rows in the table, and a network may indicate a first index value in the table by using $2^N$ status values corresponding to N-bit indication information, to indicate a first parameter configuration. Some rows in the table may be reserved without indicating any parameter configuration. It should be noted that the K parameter configurations correspond to rows that can indicate parameter values in the table. In addition, positions and a sequence of the K parameter configurations in the table are not limited in this application, and index values in the table may be numbered in another numbering manner.

Embodiments of this application further provide the following several examples of the foregoing table. In an actual system, one or more of tables provided in embodiments of this application may be used, or some rows or some columns in the table, or a table obtained through a combination or an exchange of some rows or some columns in the table may be used. The table provided in embodiments of this application may be some rows or some columns in a table used in an actual system.

Table 1-1 shows a possible example of the table corresponding to the K parameter configurations. A 7th row to a 14th row in Table 1-1 correspond to a non-interleaved manner, or parameter configurations whose index values are 6 to 13 in Table 1-1 correspond to the non-interleaved manner. Optionally, Table 1-1 is used for a channel bandwidth greater than or equal to 3 MHz. Optionally, Table 1-1 is used for a CORESET #0. Optionally, Table 1-1 is used when a subcarrier spacing of an SSB is 15 kHz and a subcarrier spacing of a PDCCH is 15 kHz. For example, the table can be named "Set of resource blocks and slot symbols of CORESET for Type0-PDCCH search space set when {SS/PBCH block, PDCCH} SCS is {15, 15} kHz for frequency bands with minimum channel bandwidth 3 MHz. Non-interleaved CCE-to-REG mapping applies for entries 6 to 13".

Table 1-1

| Index value | Multiplexing mode | Quantity of RBs | Quantity of time domain symbols | Frequency domain resource offset |
| --- | --- | --- | --- | --- |
| 0 | 1 | 12 | 2 | 0 |
| 1 | 1 | 12 | 3 | 0 |
| 2 | 1 | 24 | 3 | 0 |
| 3 | 1 | 24 | 3 | 1 |
| 4 | 1 | 24 | 3 | 2 |
| 5 | 1 | 24 | 3 | 3 |
| 6 | 1 | 24 | 3 | 0 |
| 7 | 1 | 24 | 3 | 1 |
| 8 | 1 | 24 | 3 | 2 |
| 9 | 1 | 24 | 3 | 3 |
| 10 | 1 | 24 | 2 | 0 |

(continued)

| Index value | Multiplexing mode | Quantity of RBs | Quantity of time domain symbols | Frequency domain resource offset |
|---|---|---|---|---|
| 11 | 1 | 24 | 2 | 1 |
| 12 | 1 | 24 | 2 | 2 |
| 13 | 1 | 24 | 2 | 3 |
| 14 | Reserved | | | |
| 15 | | | | |

As shown in Table 1-1, index values 0 to 13 each correspond to one parameter configuration, and index values 14 and 15 are reserved items. In an implementation, the indexes 14 and 15 may be reserved as default values, or may indicate other information. The K parameter configurations shown in Table 1-1 are 14 parameter configurations corresponding to the index values 0 to 13. Based on Table 1-1, the K parameter configurations have one or more of the following features.

1. Frequency domain resource offsets corresponding to parameter configurations with quantities of RBs being 12 in the K parameter configurations are 0.

2. Quantities of time domain symbols that correspond to the parameter configurations with quantities of RBs being 12 in the K parameter configurations are respectively 2 and 3. Optionally, a 1st row may be deleted, that is, a parameter configuration corresponding to the index value 0 is removed from the K parameter configurations. In this case, K=13. Based on this optional item, quantities of time domain symbols that correspond to the parameter configurations with quantities of RBs being 12 in the K parameter configurations are one value, and specifically, may be 3.

3. Quantities of time domain symbols that correspond to parameter configurations (as shown in a 3rd row to a 6th in Table 1-1) with quantities of RBs being 24 and mapping manners being interleaved in the K parameter configurations are 3.

4. Quantities of time domain symbols that correspond to parameter configurations (as shown in the 7th row to the 14th row in Table 1-1) with quantities of RBs being 24 and mapping manners being non-interleaved in the K parameter configurations are respectively 2 and 3.

5. Quantities of time domain symbols that correspond to the parameter configurations with quantities of RBs being 24 in the K parameter configurations are respectively 2 and 3.

6. Frequency domain resource offsets corresponding to the parameter configurations with quantities of RBs being 24 in the K parameter configurations are respectively 0, 1, 2, and 3.

It may be understood that a CORESET corresponding to the quantity 24 of RBs is a CORESET with a bandwidth of 15 RBs, and the quantity 24 of RBs may alternatively be replaced with 15. When a definition of a first RB and/or a definition of a second RB are/is different, the foregoing frequency domain resource offset may be replaced with reference to the foregoing descriptions.

Table 1-2 shows another possible example of the table corresponding to the K parameter configurations. A 9th row to a 16th row in Table 1-2 correspond to a non-interleaved manner, or parameter configurations whose index values are 8 to 15 in Table 1-2 correspond to the non-interleaved manner. Optionally, Table 1-2 is used for a channel bandwidth greater than or equal to 3 MHz. Optionally, Table 1-2 is used for a CORESET #0. Optionally, Table 1-2 is used when a subcarrier spacing of an SSB is 15 kHz and a subcarrier spacing of a PDCCH is 15 kHz. For example, the table can be named "Set of resource blocks and slot symbols of CORESET for Type0-PDCCH search space set when {SS/PBCH block, PDCCH} SCS is {15, 15} kHz for frequency bands with minimum channel bandwidth 3 MHz. Non-interleaved CCE-to-REG mapping applies for entries 8 to 15".

Table 1-2

| Index value | Multiplexing mode | Quantity of RBs | Quantity of time domain symbols | Frequency domain resource offset |
|---|---|---|---|---|
| 0 | 1 | 12/24 | 3 | 0 |
| 1 | 1 | 24 | 3 | 1 |
| 2 | 1 | 24 | 3 | 2 |
| 3 | 1 | 24 | 3 | 3 |

(continued)

| Index value | Multiplexing mode | Quantity of RBs | Quantity of time domain symbols | Frequency domain resource offset |
|---|---|---|---|---|
| 4 | 1 | 12/24 | 2 | 0 |
| 5 | 1 | 24 | 2 | 1 |
| 6 | 1 | 24 | 2 | 2 |
| 7 | 1 | 24 | 2 | 3 |
| 8 | 1 | 24 | 3 | 0 |
| 9 | 1 | 24 | 3 | 1 |
| 10 | 1 | 24 | 3 | 2 |
| 11 | 1 | 24 | 3 | 3 |
| 12 | 1 | 24 | 2 | 0 |
| 13 | 1 | 24 | 2 | 1 |
| 14 | 1 | 24 | 2 | 2 |
| 15 | 1 | 24 | 2 | 3 |

As shown in Table 1-2, index values 0 to 15 each correspond to one parameter configuration. The K parameter configurations shown in Table 1-2 are 16 parameter configurations corresponding to the index values 0 to 15. Based on Table 1-2, the K parameter configurations have one or more of the following features.

1. A parameter configuration in the K parameter configurations may correspond to a plurality of quantities of RBs, that is, correspond to 12 RBs and 24 RBs, as shown in a 1st row and a 5th row in Table 1-2.

2. Frequency domain resource offsets corresponding to parameter configurations with quantities of RBs being 12 in the K parameter configurations are 0.

3. Quantities of time domain symbols that correspond to the parameter configurations with quantities of RBs being 12 in the K parameter configurations are respectively 2 and 3. Optionally, a parameter configuration in the 5th row may correspond to only 24 RBs. Based on this, a quantity of time domain symbols that corresponds to the parameter configuration with a quantity of RBs being 12 in the K parameter configurations is one value, and specifically, may be 3.

4. Quantities of time domain symbols that correspond to parameter configurations (as shown in the 1st row to an 8th row in Table 1-2) with quantities of RBs being 24 and mapping manners being interleaved in the K parameter configurations are respectively 2 and 3. Further, optionally, the 5th row to the 8th row may be deleted. In this case, K=12. Based on this optional item, quantities of time domain symbols that correspond to parameter configurations (as shown in the 1st row to a 4th row in Table 1-2) with quantities of RBs being 24 and mapping manners being interleaved in the K parameter configurations are 3.

5. Quantities of time domain symbols that correspond to parameter configurations (as shown in the 9th row to the 16th row in Table 1-2) with quantities of RBs being 24 and mapping manners being non-interleaved in the K parameter configurations are respectively 2 and 3.

6. Quantities of time domain symbols that correspond to the parameter configurations with quantities of RBs being 24 in the K parameter configurations are respectively 2 and 3.

7. Frequency domain resource offsets corresponding to the parameter configurations with quantities of RBs being 24 in the K parameter configurations are respectively 0, 1, 2, and 3.

It may be understood that a CORESET corresponding to the quantity 24 of RBs is a CORESET with a bandwidth of 15 RBs, and the quantity 24 of RBs may alternatively be replaced with 15. When a definition of a first RB and/or a definition of a second RB are/is different, the foregoing frequency domain resource offset may be replaced with reference to the foregoing descriptions.

Optionally, the K parameter configurations provided in embodiments of this application or the table provided in embodiments of this application may alternatively not include a parameter configuration corresponding to a CORESET of 12 RBs, or may include only a parameter configuration corresponding to a CORESET of 15 RBs. For example, the parameter configurations with quantities of RBs being 12 are deleted from Table 1-1 and Table 1-2. In this case, according to the method provided in embodiments of this application, more reserved items may be reserved, so that the network indicates another possible parameter configuration or other information. In this way, signaling overheads are reduced.

Optionally, the K parameter configurations provided in embodiments of this application or the table provided in embodiments of this application may further include a parameter configuration corresponding to a CORESET of 20 RBs. For example, based on Table 1-1, Table 1-2, and a possible variant of the table, the reserved item may be replaced with the parameter configuration corresponding to the CORESET of 20 RBs, and/or some or all rows corresponding to the CORESETs of 15 RBs in the table correspond to the CORESETs of 15 RBs and the CORESETs of 20 RBs. If the table used in the actual system includes the parameter configuration corresponding to the CORESET of 20 RBs, the K parameter configurations may correspond to rows that can indicate parameter values of the CORESET of 15 RBs and the CORESET of 12 RBs in the table used in the actual system.

Table 1-3 shows still another possible example of the table corresponding to the K parameter configurations. A 7th row to a 14th row in Table 1-3 correspond to a non-interleaved manner, or parameter configurations whose index values are 6 to 13 in Table 1-3 correspond to the non-interleaved manner. Optionally, Table 1-3 is used for a channel bandwidth greater than or equal to 3 MHz and a channel bandwidth greater than or equal to 5 MHz. Optionally, Table 1-3 is used for a CORESET #0. Optionally, Table 1-3 is used when a subcarrier spacing of an SSB is 15 kHz and a subcarrier spacing of a PDCCH is 15 kHz. For example, the table can be named "Set of resource blocks and slot symbols of CORESET for Type0-PDCCH search space set when {SS/PBCH block, PDCCH} SCS is {15, 15} kHz for frequency bands with minimum channel bandwidth 3 MHz or 5 MHz. Non-interleaved CCE-to-REG mapping applies for entries 6 to 13".

Table 1-3

| Index value | Multiplexing mode | Quantity of RBs | Quantity of time domain symbols | Frequency domain resource offset |
|---|---|---|---|---|
| 0 | 1 | 12 | 2 | 0 |
| 1 | 1 | 12 | 3 | 0 |
| 2 | 1 | 24 (or 15/20) | 3 | 0 |
| 3 | 1 | 24 (or 15) | 3 | 1 |
| 4 | 1 | 24 (or 15) | 3 | 2 |
| 5 | 1 | 24 (or 15) | 3 | 3 |
| 6 | 1 | 24 (or 15/20) | 3 | 0 |
| 7 | 1 | 24 (or 15) | 3 | 1 |
| 8 | 1 | 24 (or 15) | 3 | 2 |
| 9 | 1 | 24 (or 15) | 3 | 3 |
| 10 | 1 | 24 (or 15/20) | 2 | 0 |
| 11 | 1 | 24 (or 15) | 2 | 1 |
| 12 | 1 | 24 (or 15) | 2 | 2 |
| 13 | 1 | 24 (or 15) | 2 | 3 |
| 14 | Reserved | | | |
| 15 | | | | |

As shown in Table 1-3, index values 0 to 13 each correspond to one parameter configuration, and index values 14 and 15 are reserved items, or may indicate other information. The K parameter configurations shown in Table 1-3 are 14 parameter configurations corresponding to the index values 0 to 13. Based on Table 1-3, the K parameter configurations have one or more of the following features.

1. A parameter configuration in the K parameter configurations may correspond to a plurality of bandwidths of a CORESET, or a plurality of quantities of RBs. In other words, when a quantity of RBs is 24, the parameter configuration corresponds to a bandwidth of a CORESET of 15 RBs or 20 RBs, or the quantity of RBs may be 15 or 20, as shown in a 3rd row, the 7th row, and an 11th row in Table 1-3.

2. A frequency domain resource offset corresponding to a parameter configuration in the K parameter configurations that corresponds to a CORESET whose bandwidth is 20 RBs is 0, as shown in the 3rd row, the 7th row, and the 11th row in Table 1-3. Optionally, frequency domain resource offsets corresponding to parameter configurations in the K parameter configurations that correspond to a CORESET whose bandwidth is 20 RBs may respectively be 0, 1, 2, and 3. For example, the 3rd row to the 14th row in Table 1-3 each correspond to a plurality of bandwidths of a CORESET or a plurality of quantities of RB.

3. For other similar features, refer to descriptions in Table 1-1 and Table 1-2. Details are not described herein again.

It may be understood that, when a definition of a first RB and/or a definition of a second RB are/is different, the foregoing frequency domain resource offset may be replaced with reference to the foregoing descriptions.

In still another possible example, some or all rows that correspond to a CORESET of 24 RBs and that are in a table used for a channel bandwidth greater than or equal to 5 MHz or a minimum channel bandwidth 5 MHz may correspond to a CORESET of 24 RBs and a CORESET of 20 RBs, that is, parameter configurations corresponding to the CORESET of 24 RBs and the CORESET of 20 RBs are multiplexed. A principle is the same as that in the foregoing embodiment. Details are not described herein again.

The following further describes a communication method and a communication apparatus provided in embodiments of this application.

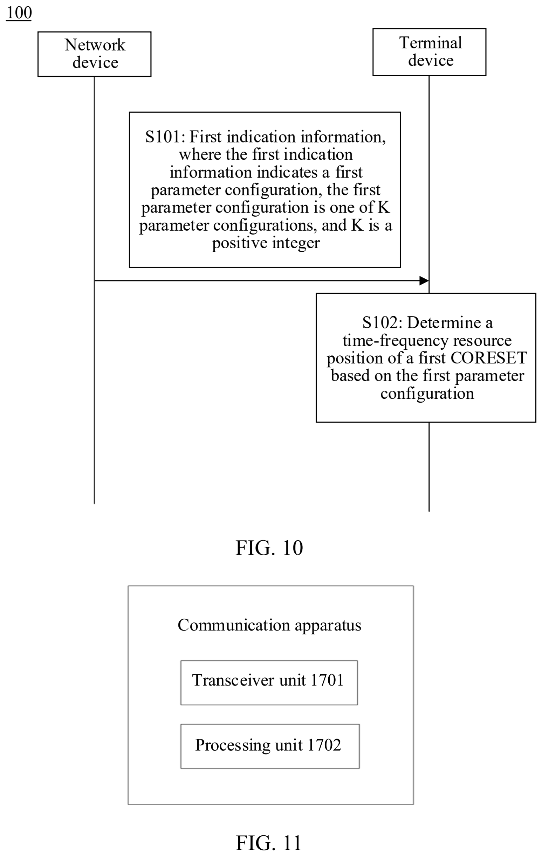

In an embodiment of this application, a communication method is provided, to reduce signaling overheads. FIG. 10 is a flowchart of a communication method 100. In the following descriptions, an example in which the method is applied to a diagram of a network architecture shown in FIG. 1 is used. For ease of description, in the following descriptions, an example in which the method is performed by a network device and a terminal device is used. For example, this embodiment of this application is applied to the network architecture shown in FIG. 1. Therefore, the network device described below is, for example, the access network device in the network architecture shown in FIG. 1, and the terminal device described below may be the terminal device in the network architecture shown in FIG. 1.

S101: The network device sends first indication information, and correspondingly, the terminal device receives the first indication information, where the first indication information indicates a first parameter configuration, the first parameter configuration is one of K parameter configurations, and K is a positive integer.

Specifically, any parameter configuration in the K parameter configurations includes one or more of the following parameters, or the any parameter configuration in the K parameter configurations consists of one or more of the following parameters: a quantity of RBs, a frequency domain resource offset, a quantity of time domain symbols, a mapping manner, a puncturing manner, and a multiplexing mode. For descriptions of the K parameter configurations and related parameters, refer to the foregoing related descriptions. Details are not described herein again. That the network device sends the first indication information may also mean that the network device outputs the first indication information.

Optionally, the first indication information may be carried in a MIB, a PBCH, or a broadcast message. The first indication information may be periodically sent.

Optionally, the first indication information may be of N bits, and different values of the N-bit information may indicate different parameter configurations in the K parameter configurations. Further, N may be 4, and K may be an integer less than or equal to $2^N$. Specifically, K may be 13, 14, 15, or 16.

Optionally, before step S101, the network device may determine the first indication information. This step is not shown in FIG. 10.

Optionally, before step S101, the network device may generate a PBCH. Further, in step S101, the network device may send the first indication information by using the PBCH. This step is not shown in FIG. 10.

S102: The network device indicates a time-frequency resource position of a first CORESET (or replaced with time-frequency resource information in the first CORESET) based on the first parameter configuration. Correspondingly, the terminal device determines the time-frequency resource position of the first CORESET based on the first parameter configuration. The first CORESET may be a CORESET #0.

Specifically, the terminal device determines, in the K parameter configurations based on the first indication information, the first parameter configuration corresponding to the first indication information. Before this, the terminal device determines the K parameter configurations, and receives the first indication information. The determining step may be performed before or after the receiving step. This is not limited in this application.

Optionally, the K parameter configurations are associated with a synchronization raster, or the terminal device may determine the K parameter configurations based on the synchronization raster, or the K parameter configurations are determined based on the synchronization raster. For example, K parameter configurations corresponding to a synchronization raster of a frequency may be specified in a protocol. In an example, it may be specified that a synchronization raster whose corresponding channel bandwidth is 3 MHz corresponds to the K parameter configurations provided in this embodiment of this application. A possible synchronization raster frequency is 920.73 MHz, or the synchronization raster is determined according to a formula 600 kHz×N+50 kHz×M+300 kHz, where N∈{1:2499}, and M∈{1, 3, 5}. In this case, bandwidths of CORESETs corresponding to the K parameter configurations may be 12 RBs and/or 15 RBs. In another example, it may be specified that a synchronization raster whose corresponding channel bandwidth is 3 MHz and a synchronization raster whose corresponding channel bandwidth is 5 MHz and quantity of available RBs is 20 correspond to the K parameter configurations provided in this embodiment of this application. A possible synchronization raster frequency is 921.45 MHz or 920.73 MHz, or the synchronization raster is determined according to a formula 600 kHz×N+50 kHz×M+300 kHz, where N$\epsilon$\{1:2499\}, and M$\epsilon$\{1, 3, 5\}. In this case, the bandwidths of the CORESETs corresponding to the K parameter configurations may be 12 RBs and/or 15 RBs and/or 20 RBs. In an example, it may be specified that a synchronization raster whose corresponding channel bandwidth is 5 MHz corresponds to the K parameter configurations provided in this embodiment of this application. A possible synchronization raster frequency is 921.45 MHz, or the synchronization raster is determined according to a formula 1200 kHz×N+50 kHz×M, where N$\epsilon$\{1:2499\}, and M$\epsilon$\{1, 3, 5\}. In this case, the bandwidths of the CORESETs corresponding to the K parameter configurations may be 24 RBs and/or 20 RBs.

Optionally, the K parameter configurations are associated with a channel bandwidth, or the terminal device may determine the K parameter configurations based on the channel bandwidth, or the K parameter configurations are determined based on the channel bandwidth. For example, K parameter configurations corresponding to a channel bandwidth may be specified in a protocol. In an example, it may be specified that the K parameter configurations provided in this embodiment of this application are used when the channel bandwidth is 3 MHz, or the K parameter configurations are used for a channel bandwidth greater than or equal to 3 MHz, or are used for a minimum channel bandwidth 3 MHz (minimum channel bandwidth 3 MHz). Optionally, the K parameter configurations or a part of the K parameter configurations may be further used for a frequency band of n100, or used for a synchronization raster of 920.73 MHz, or used for a case in which a frequency band is n100 and a PBCH transmission bandwidth is 12 RBs, or used for a case in which a PBCH transmission bandwidth is 12 RBs. In this case, the bandwidths of the CORESETs corresponding to the K parameter configurations may be 12 RBs and/or 15 RBs. In another example, it may be specified that the K parameter configurations provided in this embodiment of this application are used when the channel bandwidth is 3 MHz, or the K parameter configurations are used for a channel bandwidth greater than or equal to 3 MHz, or used for a minimum channel bandwidth 3 MHz (minimum channel bandwidth 3 MHz). Optionally, the K parameter configurations or a part of the K parameter configurations may be further used for a frequency band of n100, or used for a synchronization raster of 921.45 MHz, or used for a case in which a frequency band is n100 and a PBCH transmission bandwidth is 20 RBs, or used for a case in which a PBCH transmission bandwidth is 20 RBs. In this case, the bandwidths of the CORESETs corresponding to the K parameter configurations may be 12 RBs and/or 15 RBs and/or 20 RBs. In another example, it may be specified that the K parameter configurations provided in this embodiment of this application are used when the channel bandwidth is 5 MHz, or the K parameter configurations are used for a channel bandwidth greater than or equal to 5 MHz, or used for a minimum channel bandwidth 5 MHz (minimum channel bandwidth 5 MHz). Optionally, the K parameter configurations or a part of the K parameter configurations may be further used for a frequency band of n100, or used for a synchronization raster of 921.45 MHz, or used for a case in which a frequency band is n100 and a PBCH transmission bandwidth is 20 RBs, or used for a case in which a PBCH transmission bandwidth is 20 RBs. In this case, the bandwidths of the CORESETs corresponding to the K parameter configurations may be 24 RBs and/or 20 RBs.

Using the channel bandwidth as an example, the foregoing association may be understood as that the channel bandwidth corresponds to the K parameter configurations, that is, the K parameter configurations are used for a channel bandwidth, or an association relationship of the K parameter configurations may be determined based on the channel bandwidth. In still another example, when the bandwidths of the CORESETs corresponding to the K parameter configurations include 20 RBs, the K parameter configurations may be used for a channel bandwidth greater than or equal to 5 MHz or a minimum channel bandwidth 5 MHz. To distinguish the K parameter configurations from an existing parameter configuration set used for the channel bandwidth greater than or equal to 5 MHz or the minimum channel bandwidth 5 MHz (where a bandwidth of a CORESET corresponding to a parameter configuration in the existing parameter configuration set is greater than or equal to 24 RBs), the K parameter configurations are associated with the channel bandwidth and the synchronization raster, or the terminal device may determine the K parameter configurations based on the channel bandwidth and the synchronization raster, or the K parameter configurations are determined based on the channel bandwidth and the synchronization raster. For example, it may be specified in a protocol that a channel bandwidth and a synchronization raster correspond to the K parameter configurations. Specifically, it may be specified that, when the channel bandwidth is 5 MHz and the synchronization raster is 921.45 MHz (where a bandwidth of a CORESET corresponding to the synchronization raster is 20 RBs), the K parameter configurations provided in this embodiment of this application are used. In this case, the bandwidths of the CORESETs corresponding to the K parameter configurations may be 12 RBs and/or 15 RBs and/or 20 RBs. Alternatively, the foregoing synchronization raster may be replaced with a frequency band number. Specifically, the frequency band number may be n100.

The channel bandwidth, the frequency band number, the synchronization raster, or the PBCH transmission bandwidth is determined through a cell search process, or the channel bandwidth, the frequency band number, the synchronization raster, or the PBCH transmission bandwidth is determined based on a position of a detected synchronization signal. In the cell search process, the terminal device detects a synchronization signal, and a detection position of the synchronization signal is a synchronization raster. The terminal device may determine a frequency of the synchronization raster, a frequency band number of the synchronization signal, or a corresponding channel bandwidth or frequency band number based on the position of the detected synchronization signal. The terminal device may set a supported frequency band number during factory setting, and search for frequency bands corresponding to one or more supported frequency band numbers one by one, to detect a synchronization signal. Specifically, there may be a correspondence shown in Table 2 between the synchronization raster and the channel bandwidth, a quantity of available RBs of a channel, and/or the frequency band number. The terminal device may perform the foregoing determined action based on the correspondence. It should be understood that Table 2 does not show correspondences of all synchronization rasters.

Table 2

| Synchronization raster | Frequency band number | Channel bandwidth | Quantity of available RBs of a channel |
|---|---|---|---|
| 600 kHz×N+50 kHz×M+300 kHz, where N$\epsilon${1:2499}, and M$\epsilon${1, 3, 5}. The terminal performs detection separately on different frequency band numbers according to the formula. | n106, n26, n28, and n85 | 3 MHz | 15 RBs |
| 920.73 MHz | n100 | 3 MHz | 12 RBs |
| 921.45 MHz | n100 | 5 MHz | 20 RBs |

Based on Table 2:

1. the synchronization raster determined according to the formula 600 kHz×N+50 kHz×M+300 kHz, where N$\epsilon$ {1:2499}, and M$\epsilon${1, 3, 5}, is used for 3 MHz;
2. the synchronization raster of 920.73 MHz is used for 3 MHz or for 12 RBs; and
3. the synchronization raster of 921.45 MHz is used for 5 MHz or for 20 RBs.

The terminal device determines the time-frequency resource position of the first CORESET based on the first parameter configuration.
If the first parameter configuration corresponds to a plurality of quantities of RBs or a plurality of bandwidths of a CORESET, the terminal device may determine a bandwidth of the first CORESET based on the synchronization raster or the frequency band number. Specifically, the terminal device may determine the bandwidth of the first CORESET based on the association relationship described in the sixth optional feature. For example, if the quantity of RBs that corresponds to the first parameter configuration is 12 or 24, the terminal device may determine, based on the synchronization raster of 920.73 MHz, that the bandwidth of the first CORESET is 12 RBs, or may determine, based on the synchronization raster 600 kHz×N+50 kHz×M+300 kHz, where N$\epsilon${1:2499}, and M$\epsilon${1, 3, 5}, that the bandwidth of the first CORESET is 15 RBs. In another example, if the quantity of RBs is 24, and a bandwidth of a CORESET corresponding to the first parameter configuration is 15 RBs or 20 RBs, the terminal device may determine, based on the synchronization raster of 921.45 MHz, that the bandwidth of the first CORESET is 20 RBs, or may determine, based on the synchronization raster 600 kHz×N+50 kHz×M+300 kHz, where N$\epsilon${1:2499}, and $\epsilon${1,3,5}, that the bandwidth of the first CORESET is 15 RBs. In still another example, if the quantity of RBs is 24, and the bandwidth of the CORESET corresponding to the first parameter configuration is 24 RBs or 20 RBs, the terminal device may determine, based on the synchronization raster of 921.45 MHz, that the bandwidth of the first CORESET is 20 RBs, or may determine, based on the synchronization raster determined according to the formula 1200 kHz×N+50 kHz×M, where N$\epsilon${1:2499}, and M$\epsilon${1,3,5}, that the bandwidth of the first CORESET is 24 RBs. For another example, if the quantity of RBs that corresponds to the first parameter configuration is 12 or 24, the terminal device may determine, based on the frequency band number n100, that the bandwidth of the first CORESET is 12 RBs, or may determine, based on the frequency band number n106, n26, n28, or n85, that the bandwidth of the first CORESET is 15 RBs. In still another example, if the quantity of RBs is 24, and the bandwidth of the CORESET corresponding to the first parameter configuration is 15 RBs or 20 RBs, the terminal device may determine, based on the frequency band number n100, that the bandwidth of the first CORESET is 20 RBs, or may determine, based on the frequency band number n106, n26, n28, or n85, that the bandwidth of the first CORESET is 15 RBs. In still another example, if the quantity of RBs is 24, and the bandwidth of the CORESET corresponding to the first parameter configuration is 24 RBs or 20 RBs, the terminal device may determine, based on the frequency band number n100, that the bandwidth of the first CORESET is 20 RBs, or may determine, based on another frequency band number, that the bandwidth of the first CORESET is 24 RBs.
If the bandwidth of the CORESET corresponding to the first parameter configuration is obtained after puncturing, the first CORESET is a CORESET determined based on a CORESET before puncturing, or the first CORESET is a part of the CORESET before puncturing. For example, for a configuration parameter with a quantity of RBs being 24, 15, or 20, the first CORESET is a CORESET determined based on a CORESET of 24 RBs, or the first CORESET is a CORESET obtained by puncturing the CORESET of 24 RBs. In a specific puncturing manner, for example, the bandwidth of the CORESET corresponding to the first parameter configuration is 15 RBs. The first CORESET is 15 RBs with lowest frequencies in a CORESET of 24 RBs, or the first CORESET is a CORESET obtained by puncturing (or removing) nine RBs with highest frequencies in the CORESET of 24 RBs. Optionally, the CORESET of 24 RBs is a non-interleaved CORESET obtained based on the foregoing CORESET-related descriptions or in another manner, or an obtained interleaved CORESET whose quantity R of interleaved rows is 2. In another specific puncturing manner, for example, the bandwidth of the CORESET corresponding to the first parameter configuration is 15 RBs. The first CORESET is 15 RBs with highest frequencies in a CORESET of 24 RBs, or the first CORESET is a CORESET obtained by puncturing (or removing) nine RBs with lowest frequencies in the CORESET of 24 RBs. Optionally, the CORESET of 24 RBs is a non-interleaved CORESET obtained based on the foregoing CORESET-related descriptions or in another manner, or an obtained interleaved CORESET whose quantity R of interleaved rows is 2. When the bandwidth of the CORESET corresponding to the first parameter configuration is 20 RBs, a puncturing manner is the same. Details are not described herein again. For related descriptions of puncturing, refer to the content in the foregoing embodiment.

Optionally, the puncturing manner of the first CORESET may be a specific puncturing manner specified in a protocol, or may be a puncturing manner determined based on a puncturing manner parameter in the first parameter configuration, or may be second indication information received by the terminal device from the network device, where the second indication information indicates the puncturing manner, and the first parameter configuration does not include the second indication information.

The terminal device determines a frequency domain resource position of the first CORESET based on the frequency domain resource offset (and a frequency domain position of an SSB) in the first parameter configuration. The frequency domain resource offset is a quantity of RBs by which a first RB is offset relative to a second RB on a frequency domain resource, where the first RB is an RB with a smallest number in the first CORESET, or the first RB is an RB with a smallest number in the CORESET of 24 RBs, and the second RB is an RB with a smallest number in an overlapping part between a synchronization signal block SSB of 12 RBs and a common RB, where the SSB of 12 RBs is an SSB determined based on an SSB of 20 RBs, or the second RB is an RB with a smallest number in an overlapping part between the SSB of 20 RBs and the common RB.

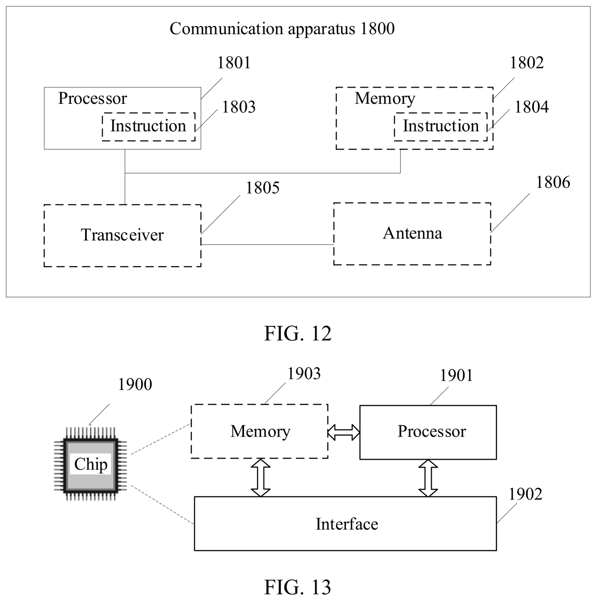

FIG. 12 is a diagram of a structure of another communication apparatus. The communication apparatus 1800 may be the terminal device or the network device in the foregoing method embodiments, or may be a chip, a chip system, a processor, or the like that supports the terminal device or the network device in implementing the foregoing method. The communication apparatus may be configured to implement the method described in the foregoing method embodiments. For details, refer to the descriptions in the foregoing method embodiments.

The communication apparatus 1800 may include one or more processors 1801. The processor 1801 may be a general-purpose processor, a dedicated processor, or the like. For example, the processor 1801 may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a software program, and process data of the software program.

Optionally, the communication apparatus 1800 may include one or more memories 1802. The memory may store instructions 1804, and the instructions may be run on the processor 1801, to cause the communication apparatus 1800 to perform the method described in the foregoing method embodiments. Optionally, the memory 1802 may further store data. The processor 1801 and the memory 1802 may be disposed separately, or may be integrated together.

Optionally, the communication apparatus 1800 may further include a transceiver 1805 and an antenna 1806. The transceiver 1805 may be referred to as a transceiver unit, a transceiver machine, a transceiver circuit, or the like, and is configured to implement a transceiver function. The transceiver 1805 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function. A processing unit 1702 shown in FIG. 11 may be the processor 1801. A transceiver unit 1701 may be the transceiver 1805.

When the communication apparatus is used in the terminal device:

The transceiver 1805 or the transceiver unit 1701 may complete the receiving action in S101 or S102 in the foregoing embodiment. The processor 1801 or the processing unit 1702 may complete the determining action in S102 in the foregoing embodiment.

When the communication apparatus is used in the network device:

The transceiver 1805 or the transceiver unit 1701 may complete the sending action in S101 in the foregoing embodiment. The processor 1801 or the processing unit 1702 may complete the determining action or the generation action in S101 in the foregoing embodiment, or the indication action in S102 in the foregoing embodiment.

In another possible design, the processor 1801 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1801 may store instructions 1803. When the instructions 1803 are run on the processor 1801, the communication apparatus 1800 may be caused to perform the method described in the foregoing method embodiments. The instructions 1803 may be fixed in the processor 1801. In this case, the processor 1801 may be implemented by hardware.

In still another possible design, the communication apparatus 1800 may include a circuit. The circuit may implement a sending, receiving, or communication function of the communication device or the first terminal device in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type Metal-oxide-semiconductor (N-type Metal-oxide-semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiment may be the terminal device or the network device. However, a scope of the communication apparatus described in embodiments of this application is not limited thereto, and a structure of the communication apparatus may not be limited to FIG. 12. The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may also include a storage component configured to store data and an instruction;
(3) an ASIC, such as a modem (KSK);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) another item.

When the communication apparatus is a chip or a chip system, refer to a diagram of a structure of a chip shown in FIG. 13. The chip 1900 shown in FIG. 13 includes a processor 1901 and an interface 1902. Optionally, the chip 1900 may further include a memory 1903. There may be one or more processors 1901, and there may be a plurality of interfaces 1902.

When the chip is configured to implement functions of the network device or the terminal device in embodiments of this application:

The interface 1902 is configured to receive or output a signal; and
the processor 1901 is configured to perform a data processing operation of the network device or the terminal device.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component.

It may be understood that the memory in this embodiment of this application may be a volatile memory or a non-volatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer-readable medium. The storage medium stores a computer program or instructions. When the computer program or the instructions are executed by a communication device, a function in any one of the foregoing method embodiments is implemented.

This application further provides a computer program product including instructions. When a computer reads and executes the computer program product, the computer is enabled to implement a function in any one of the foregoing method embodiments.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer instructions are loaded and executed on a computer, the procedures or functions based on embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disk (solid-state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   receiving first indication information, wherein the first indication information indicates a first parameter configuration, the first parameter configuration is one of K parameter configurations, and K is a positive integer, wherein any parameter configuration in the K parameter configurations comprises one or more of the following parameters:

   a quantity of resource blocks RBs, a frequency domain resource offset, a quantity of time domain symbols, and a mapping manner; and
   determining a time-frequency resource position of a first control resource set CORESET based on the first parameter configuration.

2. The method according to claim 1, wherein at least one of the following is comprised:

   the any parameter configuration in the K parameter configurations further comprises a multiplexing mode of a mode 1;
   a value of the quantity of RBs is 24 or 12;
   a bandwidth of a CORESET corresponding to a parameter configuration with a quantity of RBs being 12 is 12 RBs;
   a bandwidth of a CORESET corresponding to a parameter configuration with a quantity of RBs being 24 is 15 RBs or 20 RBs;
   a value of the frequency domain resource offset is 0 or 2;
   a value of the quantity of time domain symbols is 2 or 3;

a mapping manner corresponding to the parameter configuration with a quantity of RBs being 12 is interleaved;

a mapping manner corresponding to the parameter configuration with a quantity of RBs being 24 is interleaved or non-interleaved;

a value of a frequency domain resource offset corresponding to a parameter configuration corresponding to a CORESET whose bandwidth is 15 RBs is 0 or 2;

a mapping manner corresponding to the parameter configuration corresponding to the CORESET whose bandwidth is 15 RBs is interleaved or non-interleaved;

a value of a frequency domain resource offset corresponding to a parameter configuration corresponding to a CORESET whose bandwidth is 20 RBs is 0; and

a mapping manner corresponding to the parameter configuration corresponding to the CORESET whose bandwidth is 20 RBs is interleaved.

3. The method according to claim 1 or 2, wherein

bandwidths of CORESETs correspond to the K parameter configurations each are less than 24 RBs; and/or frequency domain resource offsets corresponding to the K parameter configurations each are a value in a first value set, wherein a quantity of values in the first value set is greater than 3.

4. The method according to any one of claims 1 to 3, wherein
the bandwidths of the CORESETs correspond to the K parameter configurations each comprise at least one of 12 RBs, 15 RBs, or 20 RBs.

5. The method according to any one of claims 1 to 4, wherein
the first indication information is of N bits, and different values of the N-bit information indicate different parameter configurations in the K parameter configurations.

6. The method according to claim 5, wherein N is 4, and K is an integer less than or equal to $2^N$.

7. The method according to any one of claims 1 to 6, wherein
a frequency domain resource offset corresponding to the parameter configuration with a quantity of RBs being 12 in the K parameter configurations is 0.

8. The method according to any one of claims 1 to 7, wherein
a quantity of time domain symbols that corresponds to the parameter configuration with a quantity of RBs being 12 and/or the parameter configuration with a quantity of RBs being 24 in the K parameter configurations is 3.

9. The method according to any one of claims 1 to 8, wherein
a quantity of time domain symbols that corresponds to the parameter configuration with a quantity of RBs being 24 and a mapping manner being interleaved in the K parameter configurations is 3.

10. The method according to any one of claims 1 to 9, wherein
one parameter configuration in the K parameter configurations corresponds to a plurality of bandwidths of a CORESET, or one parameter configuration in the K parameter configurations corresponds to values of a plurality of quantities of RBs.

11. The method according to claim 10, wherein the method further comprises:

determining a bandwidth of the first CORESET based on a synchronization raster or a frequency band number; or determining a quantity of RBs of the first CORESET based on the synchronization raster or the frequency band number.

12. The method according to any one of claims 1 to 11, wherein
the first CORESET is a CORESET determined based on a CORESET of 24 RBs, wherein the first CORESET is 15 RBs obtained by puncturing nine RBs with highest frequencies in the CORESET of 24 RBs, or the first CORESET is 20 RBs obtained by puncturing four RBs with highest frequencies in the CORESET of 24 RBs.

13. The method according to any one of claims 1 to 12, wherein
the frequency domain resource offset is a quantity of RBs by which a first RB is offset relative to a second RB on a frequency domain resource, wherein the first RB is an RB with a smallest number in the first CORESET, or the first RB is an RB with a smallest number in the CORESET of 24 RBs, and the second RB is an RB with a smallest number in an overlapping part between a synchronization signal block SSB of 12 RBs and a common RB, wherein the SSB of 12 RBs is an SSB determined based on an SSB of 20 RBs, or the second RB is an RB with a smallest number in an overlapping part between the SSB of 20 RBs and the common RB.

14. The method according to any one of claims 1 to 13, wherein
the first CORESET is a CORESET #0.

15. The method according to any one of claims 1 to 14, wherein the method further comprises:

determining the K parameter configurations based on a channel bandwidth, or determining the K parameter configurations based on the channel bandwidth and the frequency band number, wherein
the K parameter configurations are used for a minimum channel bandwidth 3 MHz, or the K parameter configurations are used for a channel bandwidth 3 MHz and/or a channel bandwidth 5 MHz.

16. The method according to any one of claims 1 to 15, wherein the first parameter configuration corresponds to a plurality of quantities of RBs or a plurality of bandwidths of a CORESET, and the method further comprises:
determining that the bandwidth of the first CORESET is 15 RBs based on a first synchronization raster, wherein the first synchronization raster is determined according to a formula 600 kHz×N+50 kHz×M+300 kHz, or determining that the bandwidth of the first CORESET is 20 RBs based on a synchronization raster of 921.45 MHz.

17. A communication method, wherein the method comprises:

sending first indication information, wherein the first indication information indicates a first parameter configuration, the first parameter configuration is one of K parameter configurations, and K is a positive integer, wherein any parameter configuration in the K parameter configurations comprises one or more of the following parameters:

a quantity of resource blocks RBs, a frequency domain resource offset, a quantity of time domain symbols, and a mapping manner; and
indicating a time-frequency resource position of a first control resource set CORESET based on the first parameter configuration.

18. The method according to claim 17, wherein at least one of the following is comprised:

the any parameter configuration in the K parameter configurations further comprises a multiplexing mode of a mode 1;
a value of the quantity of RBs is 24 or 12;
a bandwidth of a CORESET corresponding to a parameter configuration with a quantity of RBs being 12 is 12 RBs;
a bandwidth of a CORESET corresponding to a parameter configuration with a quantity of RBs being 24 is 15 RBs or 20 RBs;
a value of the frequency domain resource offset is 0 or 2;
a value of the quantity of time domain symbols is 2 or 3;
a mapping manner corresponding to the parameter configuration with a quantity of RBs being 12 is interleaved;
a mapping manner corresponding to the parameter configuration with a quantity of RBs being 24 is interleaved or non-interleaved;
a value of a frequency domain resource offset corresponding to a parameter configuration corresponding to a CORESET whose bandwidth is 15 RBs is 0 or 2;
a mapping manner corresponding to the parameter configuration corresponding to the CORESET whose bandwidth is 15 RBs is interleaved or non-interleaved;
a value of a frequency domain resource offset corresponding to a parameter configuration corresponding to a CORESET whose bandwidth is 20 RBs is 0; and
a mapping manner corresponding to the parameter configuration corresponding to the CORESET whose bandwidth is 20 RBs is interleaved.

19. The method according to claim 17 or 18, wherein

bandwidths of CORESETs correspond to the K parameter configurations each are less than 24 RBs; and/or frequency domain resource offsets corresponding to the K parameter configurations each are a value in a first value set, wherein a quantity of values in the first value set is greater than 3.

20. The method according to any one of claims 17 to 19, wherein
the bandwidths of the CORESETs correspond to the K parameter configurations each comprise at least one of 12 RBs, 15 RBs, or 20 RBs.

21. The method according to any one of claims 17 to 20, wherein
the first indication information is of N bits, and different values of the N-bit information indicate different parameter configurations in the K parameter configurations.

22. The method according to any one of claims 17 to 21, wherein N is 4, and K is an integer less than or equal to $2^N$.

23. The method according to any one of claims 17 to 22, wherein
a frequency domain resource offset corresponding to the parameter configuration with a quantity of RBs being 12 in the K parameter configurations is 0.

24. The method according to any one of claims 17 to 23, wherein
a quantity of time domain symbols that corresponds to the parameter configuration with a quantity of RBs being 12 and/or the parameter configuration with a quantity of RBs being 24 in the K parameter configurations is 3.

25. The method according to any one of claims 17 to 24, wherein
a quantity of time domain symbols that corresponds to the parameter configuration with a quantity of RBs being 24 and a mapping manner being interleaved in the K parameter configurations is 3.

26. The method according to any one of claims 17 to 25, wherein
one parameter configuration in the K parameter configurations corresponds to a plurality of bandwidths of a CORESET, or one parameter configuration in the K parameter configurations corresponds to values of a plurality of quantities of RBs.

27. The method according to claim 26, wherein

a bandwidth of the first CORESET is associated with a synchronization raster or a frequency band number; or a quantity of RBs of the first CORESET is associated with the synchronization raster or the frequency band number.

28. The method according to any one of claims 17 to 27, wherein
the first CORESET is a CORESET determined based on a CORESET of 24 RBs, wherein the first CORESET is 15 RBs obtained by puncturing nine RBs with highest frequencies in the CORESET of 24 RBs, or the first CORESET is 20 RBs obtained by puncturing four RBs with highest frequencies in the CORESET of 24 RBs.

29. The method according to any one of claims 17 to 28, wherein
the frequency domain resource offset is a quantity of RBs by which a first RB is offset relative to a second RB on a frequency domain resource, wherein the first RB is an RB with a smallest number in the first CORESET, or the first RB is an RB with a smallest number in the CORESET of 24 RBs, and the second RB is an RB with a smallest number in an overlapping part between a synchronization signal block SSB of 12 RBs and a common RB, wherein the SSB of 12 RBs is an SSB determined based on an SSB of 20 RBs, or the second RB is an RB with a smallest number in an overlapping part between the SSB of 20 RBs and the common RB.

30. The method according to any one of claims 17 to 29, wherein
the first CORESET is a CORESET #0.

31. The method according to any one of claims 17 to 30, comprising:

the K parameter configurations are associated with a channel bandwidth, or the K parameter configurations are associated with the channel bandwidth and the frequency band number; and
the K parameter configurations are used for a minimum channel bandwidth 3 MHz, or the K parameter configurations are used for a channel bandwidth 3 MHz and/or a channel bandwidth 5 MHz.

32. The method according to any one of claims 17 to 31, wherein the first parameter configuration corresponds to a plurality of quantities of RBs or a plurality of bandwidths of a CORESET, and a bandwidth that is of the first CORESET and that corresponds to a first synchronization raster is 15 RBs, wherein the first synchronization raster is determined according to a formula 600 kHz×N+50 kHz×M+300 kHz, or a bandwidth that is of the first CORESET and that corresponds to a synchronization raster of 921.45 MHz is 20 RBs.

33. A communication apparatus, comprising a unit configured to perform the method according to any one of claims 1 to 16.

34. A communication apparatus, comprising a unit configured to perform the method according to any one of claims 17 to 32.

35. A communication apparatus, wherein the communication apparatus comprises a processor; and the processor is configured to run a computer program or instructions, to cause the communication apparatus to perform the method according to any one of claims 1 to 16 or the method according to any one of claims 17 to 32.

36. A computer-readable storage medium, wherein the computer-readable storage medium stores computer instructions or a program, and when the computer instructions or the program is run on a communication apparatus, the method according to any one of claims 1 to 16 or the method according to any one of claims 17 to 32 is performed.

37. A computer program product, wherein the computer program product comprises computer instructions; and when a part or all of the computer instructions are run on a communication apparatus, the method according to any one of claims 1 to 16 or the method according to any one of claims 17 to 32 is performed.

38. A communication system, comprising the communication apparatus according to claim 33 and the communication apparatus according to claim 34.

FIG. 1

EP 4 718 927 A1

| REG bundle 11 | CCE 11 | REG bundle 7 | CCE 7 |
|---|---|---|---|
| REG bundle 10 | CCE 9 | REG bundle 6 | CCE 5 |
| REG bundle 9 | CCE 7 | | |
| REG bundle 8 | CCE 5 | REG bundle 5 | CCE 3 |
| REG bundle 7 | CCE 3 | REG bundle 4 | CCE 1 |
| REG bundle 6 | CCE 1 | | |
| REG bundle 5 | CCE 10 | REG bundle 3 | CCE 6 |
| REG bundle 4 | CCE 8 | | |
| REG bundle 3 | CCE 6 | REG bundle 2 | CCE 4 |
| REG bundle 2 | CCE 4 | REG bundle 1 | CCE 2 |
| REG bundle 1 | CCE 2 | | |
| REG bundle 0 | CCE 0 | REG bundle 0 | CCE 0 |

24 RBs

Three symbols          Two symbols

FIG. 2

Uplink                    Downlink

3 MHz                    3 MHz

703    733    736    748    758    788    791    803    f (MHz)

5 MHz                    5 MHz

698    703    728    728    758    783    f (MHz)

FIG. 3

CCE 11
CCE 9
CCE 7
CCE 5
CCE 3
CCE 1

24 RBs

CCE 10          CCE 5
CCE 8           CCE 3
CCE 6           CCE 1
CCE 4           CCE 4
CCE 2           CCE 2
CCE 0           CCE 0

12 RBs          12 RBs

Three symbols          Three symbols

FIG. 4

FIG. 5

FIG. 6

12 RBs

Second RB

SSB

First RB

A requency domain resource offset is 0

First RB

A frequency domain resource offset is 1

First RB

A frequency domain resource offset is 2

First RB

A frequency domain resource offset is 3

Possible frequency domain positions of a CORESET of 15 RBs in a channel with 15 available RBs

FIG. 7

12 RBs

Second RB

SSB

First RB

A frequency domain resource offset is 0

First RB

A frequency domain resource offset is 1

First RB

A frequency domain resource offset is 2

First RB

A frequency domain resource offset is 3

First RB

A frequency domain resource offset is −1

First RB

A frequency domain resource offset is −2

First RB

A frequency domain resource offset is −3

Possible frequency domain positions of a CORESET of 12 RBs in a channel with 15 available RBs

FIG. 8

CCE 11
CCE 9
CCE 7
CCE 5
CCE 3
CCE 1
CCE 10
CCE 8
CCE 6
CCE 4
CCE 2
CCE 0

24 RBs

15 RBs

Three symbols

CCE7
CCE 5
CCE 3
CCE 1
CCE 6
CCE 4
CCE 2
CCE 0

24 RBs

15 RBs

Two symbols

FIG. 9

100

Network device | Terminal device

S101: First indication information, where the first indication information indicates a first parameter configuration, the first parameter configuration is one of K parameter configurations, and K is a positive integer

S102: Determine a time-frequency resource position of a first CORESET based on the first parameter configuration

FIG. 10

Communication apparatus

Transceiver unit 1701

Processing unit 1702

FIG. 11

Communication apparatus 1800

1801 1802

Processor 1803 Memory 1804

Instruction Instruction

1805 1806

Transceiver Antenna

**FIG. 12**

1900 1903 1901

Memory Processor

Chip

1902

Interface

**FIG. 13**

## INTERNATIONAL SEARCH REPORT

| International application No. |
|---|
| **PCT/CN2024/099949** |

| A. | CLASSIFICATION OF SUBJECT MATTER |
|---|---|

H04W72/0453(2023.01)i

According to International Patent Classification (IPC) or to both national classification and IPC

| B. | FIELDS SEARCHED |
|---|---|

Minimum documentation searched (classification system followed by classification symbols)

IPC:H04B,H04W,H04L

Documentation searched other than minimum documentation to the extent that such documents are included in the fields searched

Electronic data base consulted during the international search (name of data base and, where practicable, search terms used)

CNTXT, ENTXTC, DWPI, WPABS, 3GPP: CORESET, CORESET#0, 配置, 索引, RB, 带宽, 3MHz, 5MHz, configuration, index, bandwidth

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023051458 A1 (HUAWEI TECHNOLOGIES CO., LTD.) 06 April 2023 (2023-04-06) description, page 17, paragraph 6-page 25, paragraph 1 | 1-38 |
| X | NOKIA et al. "NR support for below 5 MHz BW" *3GPP TSG RAN WG1 #113, R1-2305026*, 26 May 2023 (2023-05-26), section 3.2 | 1-38 |
| X | QUALCOMM INC. "NR support for dedicated spectrum less than 5MHz for FR1" *3GPP TSG RAN WG1 #113, R1-2305364*, 26 May 2023 (2023-05-26), section 2.2.3 | 1-38 |
| A | WO 2021212300 A1 (QUALCOMM INC.) 28 October 2021 (2021-10-28) entire document | 1-38 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 September 2024** | **19 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | | International application No. |
|---|---|---|---|
| Information on patent family members | | | **PCT/CN2024/099949** |

| Patent document cited in search report | | | Publication date (day/month/year) | Patent family member(s) | | | Publication date (day/month/year) |
|---|---|---|---|---|---|---|---|
| WO | 2023051458 | A1 | 06 April 2023 | US | 2024244605 | A1 | 18 July 2024 |
| | | | | KR | 20240071408 | A | 22 May 2024 |
| | | | | EP | 4398502 | A1 | 10 July 2024 |
| | | | | CN | 115883008 | A | 31 March 2023 |
| WO | 2021212300 | A1 | 28 October 2021 | None | | | |

Form PCT/ISA/210 (patent family annex) (July 2022)